# EUROPEAN PATENT SPECIFICATION

(11) **EP 3 961 464 B1**
(45) Date of publication and mention of the grant of the patent: **08.05.2024**
(21) Application number: 21806930.0
(22) Date of filing: 13.05.2021
(51) Int. Cl.: G06F 21/84, G06F 8/20, G06F 8/41, G06F 9/455

(54) **NUCLEAR-GRADE SAFETY DISPLAY APPARATUS AND CONFIGURATION-PARSING SYSTEM THEREFOR**
SICHERHEITSANZEIGEVORRICHTUNG IN NUKLEARER QUALITÄT UND KONFIGURATIONSPARSINGSYSTEM DAFÜR
APPAREIL D'AFFICHAGE DE SÉCURITÉ DE QUALITÉ NUCLÉAIRE ET SYSTÈME D'ANALYSE DE CONFIGURATION ASSOCIÉ

(30) Priority: 28.06.2020 CN 202010595078
(43) Date of publication of application: 02.03.2022
(73) Proprietor: Nuclear Power Institute of China, Chengdu, Sichuan 610213 (CN)
(72) Inventor: MA, Quan, Chengdu, Sichuan 610213 (CN); ZHAO, Yang, Chengdu, Sichuan 610213 (CN); LIU, Mingxing, Chengdu, Sichuan 610213 (CN); JIANG, Wei, Chengdu, Sichuan 610213 (CN); CHEN, Daqi, Chengdu, Sichuan 610213 (CN); WU, Yanqun, Chengdu, Sichuan 610213 (CN); YANG, Bin, Chengdu, Sichuan 610213 (CN); YANG, Fei, Chengdu, Sichuan 610213 (CN); WANG, Heng, Chengdu, Sichuan 610213 (CN)
(74) Representative: Sun, Yiming
(86) International application number: PCT/CN2021/093501
(87) International publication number: WO 2022/001403

(56) References cited:
- WO-A1-2012/069935
- CN-A- 105 302 545
- CN-A- 106 569 801
- CN-A- 107 239 601
- CN-A- 111 488 631
- US-A1- 2005 138 381
- US-A1- 2008 059 504
- US-A1- 2011 307 860
- US-A1- 2018 081 794

## Description

### Field of the Invention

The present invention relates to the technical field of nuclear safety-grade digital instrument and control, in particular to a nuclear-grade safety display device and a configuration-parsing system.

### Background of the Invention

The nuclear-grade safety display device is a kind of human-machine interaction device which is, supported by the security-level DCS, used to perform parameter monitoring and manual intervention of nuclear power reactor operation or nuclear chemical key process in the nuclear power or nuclear chemical industry, and is also used for personnel training and operation assessment. The basic functions of the nuclear-grade safety display device include configuration, display, communication, human-machine input, storage and analog simulation:
1) Configuration: offline engineering page design, variable management and parameter configuration by means of configuration tools;
2) Display: presenting engineering pages in a real or simulated manner;
3) Communication: data communication inside the nuclear-grade safety display device and between the nuclear-grade safety display device and the security-level DCS;
4) Human-machine input: allowing manual input of control instructions to influence the behavior of the nuclear-grade safety display device;
5) Storage: long-term recording of process data and self-state information from the security-level DCS;
6) Analog simulation: quick verification of engineering configuration pages of the nuclear-grade safety display device, long-term recording of operation process data, loading and playback of running process data, and the like.

The common practice of the design of configuration function of domestic and overseas nuclear-grade safety display devices is to convert the offline human-machine interaction engineering page design, variable management and parameter configuration into a specific computer language, translate the language into a machine language and then run the language on a target machine. This practice faces a challenge of calculating process reliability of translating the engineering configuration information into a target code. The translation process reliability may be verified by mathematical methods such as formalization; however, these methods are complicated and time-consuming, requiring long-time demonstration of the verification results.

In the meantime, domestic and overseas nuclear-grade safety display devices generally run in a Linux environment or an embedded environment under an X86 platform. In the Linux environment, the development of various applications is easy, but the software validation and verification is complicated and difficult; at the same time, it is difficult to ensure the stability of the running cycle, which seriously reduces the high certainty of nuclear-grade safety display devices. In the embedded environment, the stability of the running cycle can be well guaranteed, but the development of various application functions is relatively complex; at the same time, due to the processor performance and other constraints of the embedded environment, the application functions are not rich enough to meet the increasing application demands.

In addition, in designing the analog simulation function of domestic and overseas nuclear-grade safety display devices, the numerical simulation is adopted to allow for only the behavioral simulation, but no simulation function available for evaluating the functional correctness and reliability of nuclear-grade safety display devices.

Finally, domestic and overseas nuclear-grade safety display devices have shortcomings of low seismic characteristics and low integration level, and cannot provide an integrated solution for simultaneously considering the developmental needs of engineering applications, extremely high reliability, training and teaching, digital twining, operation and maintenance data collection and analysis, and preventive maintenance. Prior art document US2008/059504 A1 (BARBETTA JACKIE [US] ET AL) relates to a customized graphical user interface generating method, which involves converting a merged file into executable applications for generating a customized graphical user interface. The present invention is set out in the independent claims, with some optional features set out in the claims dependent thereto.

### Summary of the Invention

To solve the shortcomings in the prior art, the present invention provides a nuclear-grade safety display device configuration-parsing system and a nuclear-grade safety display device designed on the basis of the configuration-parsing system.

Different from the conventional graphic configuration method on the basis of computer language translation and conversion, the configuration-parsing system of the present invention implements the engineering configuration editing and compilation of the nuclear-grade safety display device by a parameterized configuration data construction method, thereby avoiding a huge workload of verifying and checking the translation process reliability by such methods as formalized mathematics.

Without frequent task scheduling, stack operations, interruptions and program pointer jumps of a multitasking system, the configuration parser and the configuration simulator designed by the present invention based on the configuration data construction method execute engineering configuration-related functions sequentially and in a single task, and show high certainty, i.e., the execution sequence, execution time and execution result of function items are determined and predictable.

According to the present invention, the information security prevention mechanism of configuration xml files is specifically designed, i.e., the phenomenon of unauthorized reading and tampering of xml files is effectively prevented by operations such as encryption and decryption of xml files, CRC64 verification and the like, thereby eliminating the risk of abnormal operation of physical machine and analog machine caused by compilation of illegal xml files.

The physical machine and analog machine of the nuclear-grade safety display device of the present invention are equipped with the same configuration parser, allowing basic application functions to be developed on the basis of the physical machine or the analog machine without essential difference. The physical machine and the analog machine are able to verify the correctness of each other's functions.

According to the present invention, the reliability of the physical machine is further improved by the hot standby collaboration mechanism among the physical machines. Based on this mechanism, the permissions of the master device and the backup device are automatically generated, and the human-machine interaction behavior of the master device may be synchronously reproduced on the backup device; as a result, the master device and the backup device can be deployed in different physical spaces, but behave exactly the same, which improves the friendliness of engineering application.

The present invention adopts the method of combining data differential storage and data compression storage to solve the problem of data storage in the long-term operation process of the analog machine, which lays a foundation for the long-term digital twinning of the physical machine and the analog machine in the operation and maintenance stage.

In the simulation collaboration mechanism of the physical machine and the analog machine of the present invention, the analog machine can perform digital twinning on the physical machine in real time by acquiring self-diagnosis fault data from the physical machine and network variable data from the security-level DCS forwarded by the physical machine, i.e., the analog machine and the physical machine run synchronously with consistent running behaviors. In the meantime, the analog machine can perform fault diagnosis and preventive maintenance early warning analysis on the physical machine, thus avoiding the shortcoming of conventional digital twining, that is, not real-time. In addition, the long-term process data recorded by the analog machine are also helpful for teaching and training as well as post-accident condition assistant analysis and positioning.

The physical machine and the analog machine of the present invention are of an integrated seismic structure and have the same appearance, which is conducive to installation, use and system integration.

### Brief Description of Drawings

The drawings illustrated herein are intended to provide a further understanding of embodiments of the present invention, and constitute a part of the present application, but do not constitute a limitation of embodiments of the present invention. In the drawings:
Fig. 1 is a schematic diagram of the configuration-parsing procedure according to the present invention.
Fig. 2 is a structural representation of the configuration data according to the present invention.
Fig. 3 illustrates a storage structure of configuration information of a single engineering page according to the present invention.
Fig. 4 illustrates a storage structure of configuration data responding to a single human-machine event according to the present invention.
Fig. 5 is a schematic layout of the configuration editor according to the present invention.
Fig. 6 is a canvas diagram of the configuration editor according to the present invention.
Fig. 7 is a schematic diagram of components of the configuration editor according to the present invention.
Fig. 8 is a schematic diagram of the interactive relationship between the graphical interface of the configuration editor and xml files according to the present invention.
Fig. 9 is a schematic diagram of the engineering page updating process according to the present invention.
Fig. 10 is an interface diagram of the configuration compiler according to the present invention.
Fig. 11 is a schematic diagram of the running process of the configuration compiler according to the present invention.
Fig. 12 is a flow diagram of the configuration compiler in running stage 1 according to the present invention.
Fig. 13 is a flow diagram of the configuration compiler in running stage 2 according to the present invention.
Fig. 14 is a flow diagram of the configuration compiler in running stage 3 according to the present invention.
Fig. 15 is a running flowchart of the configuration parser according to the present invention.
Fig. 16 is an execution flow diagram of the page ready state of the configuration parser according to the present invention.
Fig. 17 is an execution flow diagram of the page working state of the configuration parser according to the present invention.
Fig. 18 is a parsing flowchart of configuration data by the configuration parser according to the present invention.
Fig. 19 is a schematic diagram of the overall architecture of the configuration simulator according to the present invention.
Fig. 20 is a differential storage structure of data generated by the configuration parser according to the present invention.
Fig. 21 is an operation information display window of the configuration simulator according to the present invention.
Fig. 22 is a running interface view of the configuration simulator according to the present invention.
Fig. 23 is a data flow of the configuration simulator running in an engineering configuration page verification mode according to the present invention.
Fig. 24 is a data flow of the configuration simulator running in an analog machine mode according to the present invention.
Fig. 25 is a data flow of the simulation running stage in an analog machine mode according to the present invention.
Fig. 26 is a data flow diagram of the replay running stage in an analog machine mode according to the present invention.
Fig. 27 is a structural representation of the nuclear-grade safety display device according to the present invention.
Fig. 28 is a schematic diagram of the internal logical relationship among components of the nuclear-grade safety display device according to the present invention.
Fig. 29 is an exploded view of the integrated seismic structure according to the present invention.
Fig. 30 is a structural representation of the front panel of the integrated seismic structure according to the present invention.
Fig. 31 is an overall assembly diagram of the integrated seismic structure according to the present invention.
Fig. 32 is an internal assembly diagram of the integrated seismic structure according to the present invention.
Fig. 33 is a structural representation of a high density heterogeneous circuit topology according to the present invention.
Fig. 34 is a schematic diagram of the overall architecture of the co-accelerator according to the present invention.
Fig. 35 is a schematic diagram of the overall architecture of the graphic co-acceleration unit according to the present invention.
Fig. 36 shows the internal structure and data flow of the human-machine co-processing unit according to the present invention.
Fig. 37 is a schematic diagram of the overall structure of the storage co-processing unit according to the present invention.
Fig. 38 is a communication connection form under the hot standby collaboration mechanism according to the present invention.
Fig. 39 is a permission validation flowchart of the master and backup devices during the power-on startup process according to the present invention.
Fig. 40 is a schematic diagram of data exchange in the running process of the master and backup devices according to the present invention.
Fig. 41 is a schematic diagram of data exchange between the master and backup devices and the security-level DCS according to the present invention.
Fig. 42 is a communication connection form under the simulation collaboration mechanism according to the present invention.
Fig. 43 is a schematic diagram of data exchange between the physical machine and the analog machine under the simulation collaboration mechanism according to the present invention.
Fig. 44 is a record and storage strategy for long-period process data according to the present invention.
Fig. 45 is a flow diagram of clock-related instability analysis and preventive maintenance alarm according to the present invention.
Fig. 46 is a flow diagram of power instability analysis and preventive maintenance alarm according to the present invention.
Fig. 47 is a flow diagram of instability analysis and preventive maintenance alarm of the human-machine input device according to the present invention.
Fig. 48 is a flow diagram of instability analysis and preventive maintenance alarm of the storage device according to the present invention.

### Detailed Description of the Preferred Embodiments

In the following text, the term "includes" or "may include" as may be used in various embodiments of the present invention indicates the existence of the invented functions, operations or elements, and does not limit the addition of one or more functions, operations or elements. Furthermore, as used in various embodiments of the present invention, the terms "includes", "has" and their cognate words are only intended to denote specific features, numbers, steps, operations, elements, components or combinations thereof, and should not be understood as excluding the existence of one or more other features, numbers, steps, operations, elements, components or combinations thereof or the addition of one or more features, numbers, steps, operations, elements, components or combinations thereof.

In various embodiments of the present invention, the expression "or" or "at least one of A or/and B" includes any or all combinations of words listed at the same time. For example, the expression "A or B" or "at least one of A or/and B" may include A or B, or both.

Expressions used in various embodiments of the present invention (e.g. "first", "second" and the like) may modify various elements in various embodiments, but are not intended to limit the corresponding elements. For example, the above description does not limit the order and/or importance of the elements, but distinguishes one element from other elements. By way of example, a first user device and a second user device indicate different user devices, although both are user devices. Without departing from the scope of various embodiments of the present invention, the first element may be referred to as the second element; likewise, the second element may also be referred to as the first element.

It should be noted that, if one element is "connected" to another element, the first element may be directly connected to the second element, and a third element may be "connected" between the first element and the second element. Rather, when one element is "directly connected" to another element, it can be understood that a third element is not connected between the first element and the second element.

The terms used in various embodiments of the present invention are intended to describe particular embodiments only, rather than limiting various embodiments of the present invention. As used herein, the singular form is intended to include the plural form as well, unless the context clearly indicates otherwise. Unless otherwise defined, all terms used herein (including technical terms and scientific terms) have the same meanings as those commonly understood by those skilled in the art to which various embodiments of the present invention belong. The terms (e.g. those defined in commonly used dictionaries) will be interpreted as having the same meaning as the contextual meaning in relevant technical fields and will not be interpreted as having an idealized meaning or an overly formal meaning unless clearly defined in various embodiments of the present invention.

To make more clearly the purpose, technical solution and advantages of the present invention, the present invention will be described in further detail below with reference to embodiments and drawings. The illustrative embodiments of the present invention and their descriptions are only intended to explain the present invention, and are not constructed as limiting the present invention.

To better illustrate embodiments of the present invention, the technical names and abbreviations used below are explained as follows:
Physical machine: a form of nuclear-grade safety display device;
Analog machine: a variant of physical machine, which implements analog simulation and digital twinning of the physical machine;
Network variable: information carrier for network communication;
Cache: a data exchange buffer;
Function Fun: a function, which executes a specific function in the nuclear-grade safety display device;
DCS: distributed control system;
PLM: priority logic management;
FPGA: field programmable gate array;
MPU: microprocessor;
xml: extensible markup language;
Ul: user interface;
Buffer: buffer;
AES: advanced encryption standard;
ADC: analog-to-digital converter;
RAM: random access memory;
SRAM: static random access memory;
Flash: flash memory;
RS latch: set/reset latch;
SPI: serial peripheral interface.

### Embodiment 1

This embodiment provides a nuclear-grade safety display device configuration-parsing system, which implements the engineering configuration editing, compiling and parsing operation of the nuclear-grade safety display device by a parameterized configuration data construction method.

The configuration-parsing system in this embodiment consists of a configuration editor, a configuration compiler and a configuration parser. The configuration editor implements the engineering configuration page design and parameter configuration to generate an xml description file of user configuration data; the configuration compiler converts the xml description file of user configuration data to generate a configuration data file; and the configuration parser is deployed on a physical machine or an analog machine or an upper computer of the nuclear-grade safety display device, and parses the configuration data file and periodically generates running data, which include internal variable data, engineering page data and human-machine operation data.

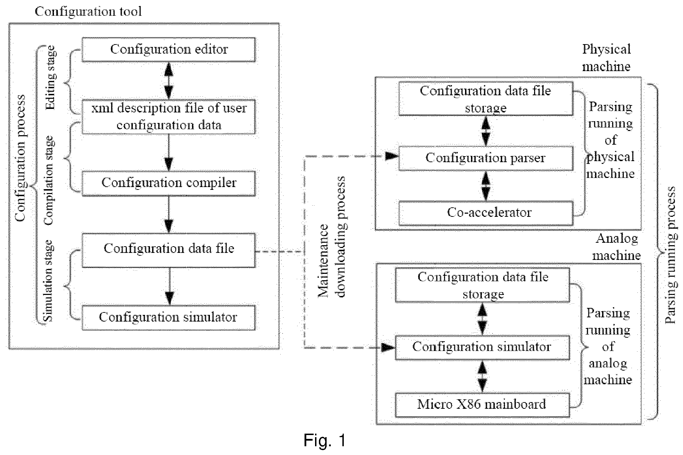

Specifically, as shown in Fig. 1, the configuration-parsing process of a nuclear-grade safety display device includes:

### 1) Configuration process

The graphic configuration function is implemented by means of the configuration process, which is subdivided into three stages:
A. Editing stage: the engineering configuration page design and parameter configuration are implemented by means of a graphical interface, and the xml description file of user configuration data is generated in this stage;
B. Compilation stage: according to the configuration data construction method, the xml description file of user configuration data is converted into data that can be recognized by subsequent configuration parser and configuration simulator, and the configuration data file is generated in this stage; and
C. Simulation stage: the configuration data file generated in the compilation stage is parsed and simulated.

### 2) Maintenance downloading process

The configuration data file is downloaded to a dedicated storage of the physical machine or analog machine in the maintenance downloading process.

### 3) Parsing running process

The parsing running process includes the parsing running of the physical machine and the analog machine:
The configuration parser in the physical machine parses the configuration data, restores an engineering configuration page in coordination with a co-accelerator, and executes the functions of human-machine interaction, data communication and data storage according to the parameter configuration.

The configuration simulator in the analog machine runs by simulating the physical machine, restores an engineering configuration page and executes the functions of human-machine interaction, data communication and data storage according to the parameter configuration.

### 1. Configuration data

The configuration data construction method adopted in this embodiment defines the configuration data construction form of the nuclear-grade safety display device, including the storage structure of the configuration data, the functions and storage forms of each part inside the configuration data, the parameter form and the byte order. The configuration data construction method is the basis for the design of the configuration compiler, the configuration simulator and the configuration parser.

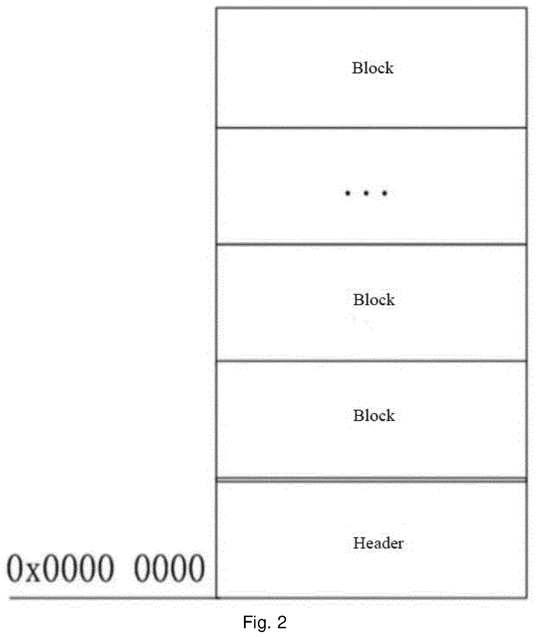

Fig. 2 illustrates the basic structure of the parameterized configuration data constructed in this embodiment, wherein the configuration data is a little-endian, 4-byte aligned, closely arranged binary data with CRC32 check code in the data header.

The configuration data consists of header data and function block data.

The header data serves as data check, data annotation and index table in the configuration data, and covers specific information including check information, length information, version number information, description information, basic information of each functional data block and offset address of each functional data block in configuration data.

The data block contains engineering page information, switching logic information and variable association information, and is composed of the following specific functional blocks: color block, network variable block, network packing block, network unpacking block, page block, alarm configuration block, local variable block, periodic execution block and image resource block.

The color block is a data block composed of a plurality of horizontal color lines, and is used to characterize the mass bit abnormality of network variables associated with icons, with each color horizontal line occupying one item for storage. The length and format of the block and the meaning of each color horizontal line are fixed. The color block storage format is shown in Table 1.

**Table 1 Color block storage format**

| | |
|---|---|
| Index 1, mosaic color | 256-byte data, representing 256 pixels |
| Index 2, pure black | 256-byte data, representing 256 pixels |

The variable blocks include a network variable block for external communication, a system variable block for monitoring a local exception and a local variable block for transferring local logical information. The variable block storage format is shown in Table 2.

**Table 2 Variable block storage format**

| | |
|---|---|
| Index 1 | One variable item |
| Index 2 | One variable item |
| ... | One variable item |
| Index n | One variable item |

The network packing block, the network unpacking block and the periodic execution block all store a plurality of function Funs. Each function Fun is used and executed in sequence according to the storage order to complete the tasks of network packing, network unpacking and periodic operation. The storage formats of the network packing block, the network unpacking block and the periodic execution block are shown in Table 3.

**Table 3 Storage formats of network unpacking block, network packing block and periodic execution block**

| | |
|---|---|
| Index 1 | Single function fun |
| Index 2 | Single function fun |
| ... | Single function fun |
| Index n | Single function fun |

The page block stores the configuration parameter information in the engineering configuration page, with the storage structure shown in Table 4.

**Table 4 Page block storage structure**

| | |
|---|---|
| Index 1 (corresponding to engineering page 1) | Configuration information of a single engineering page |
| Index 2 (corresponding to engineering page 2) | Configuration information of a single engineering page |
| | Configuration information of a single engineering page |
| Index n (corresponding to engineering page n) | Configuration information of a single engineering page |

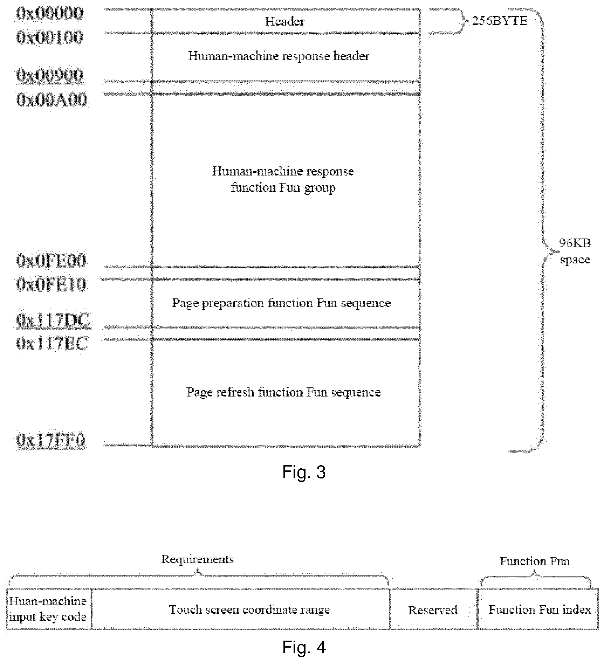

in Table 4, the storage structure of configuration information of a single engineering page is shown in Fig. 3.

In Fig. 3, the header data segment stores the number of headers involved in "Human-Machine Response Header", "Page Preparation Function Fun Sequence" and "Page Refresh Function Fun Sequence" and the number of function Funs actually used. The storage structure of the human-machine response header is shown in Table 5.

**Table 5 Storage structure of human-machine response header**

| | |
|---|---|
| Item 1 | Configuration data responding to a single human-machine event |
| Item 2 | Configuration data responding to a single human-machine event |
| ... | Configuration data responding to a single human-machine event |
| Item 100 | Configuration data responding to a single human-machine event |

In Table 5, the storage structure of configuration data responding to a single human-machine event is shown in Fig. 4, which defines the relationship between human-machine input and logical behavior of the nuclear-grade safety display device.

In Fig. 3, the storage structure of human-machine response function Fun group is shown in Table 6.

**Table 6 Storage structure of human-machine response function Fun group**

| | |
|---|---|
| Fun group 1 | One Fun group |
| Fun group 2 | One Fun group |
| ... | One Fun group |
| Fun group 60 | One Fun group |

In Table 6, a Fun group is composed of a series of function Funs with similar characteristics and functions.

The alarm configuration block stores the configuration data of the device fault log and the process alarm log in the nuclear-grade safety display device. The storage structure of alarm configuration data is shown in Table 7.

**Table 7 Storage structure of alarm configuration block**

| | |
|---|---|
| Resource index 1 | One alarm configuration |
| Resource index 2 | One alarm configuration |
| ... | One alarm configuration |
| Resource index n. | One alarm configuration |

The specific format of single alarm configuration is shown in Table 8.

**Table 8 Storage structure of single alarm configuration data**

| | | | | | | |
|---|---|---|---|---|---|---|
| Variable name image index | Image index 1 for flashing alarm | Image index 2 for flashing alarm | Alarm sign image index | Alarm description image index | Alarm level | Alarm source |

The image resource block stores complex icon elements in the engineering page of the nuclear-grade safety display device, with a storage structure shown in Table 9.

**Table 9 Storage structure of image resource block**

| | |
|---|---|
| Resource index 1 | Index information of a single image resource |
| Resource index 2 | Index information of a single image resource |
| ... | Index information of a single image resource |
| Resource index n | Index information of a single image resource |
| Specific data of image resource | |

The index information of a single image resource contains an offset address and the number of bytes occupied by the image resource in the image resource block.

The specific data of image resources include width, height and pixel value. A single image resource is stored in a one-dimensional linear physical structure and logically accessed in a two-dimensional structure based on rows and columns. The starting byte of each row of data marks whether the data in this row are compressed or not, and a value of "1" indicates compressed data, while a value of "0" indicates original image data.

These data blocks are parsed and executed by variable items which are the carrier of data and logic transmission and Function fun which executes specific and practical functions.

In the nuclear-grade safety display device, the variable items occupy 32 bytes, with the specific format shown in Table 10.

**Table 10 Data format of variable items.**

| | | | | |
|---|---|---|---|---|
| Bytes occupied | 2 Byte | 2Byte | 2 Byte | 26Byte |
| Function | Variable type | Index | Variable source | Specific data value |

Each function Fun corresponds to a function with specific functions in a physical machine, an analog machine or a configuration simulator and has a unique number ID.

Each function Fun consists of a number ID and parameters. The number ID and parameters are 32-bit unsigned numbers, with the storage structure shown in Table 11.

**Table 11 Function Fun storage structure**

| | | | | | | | | | | | | |
|---|---|---|---|---|---|---|---|---|---|---|---|---|
| Functio n Fun ID | Param eter1 | Param eter 2 | Param eter 3 | Param eter 4 | Param eter 5 | Param eter 6 | Param eter 7 | Param eter 8 | Param eter 9 | Param eter 10 | Param eter 11 | Param eter 12 |

### 2. Configuration editor

The configuration editor provides an graphical interface for engineering page configuration, engineering page switching logic, variable association and icon library configuration management. The results of engineering page configuration, engineering page switching logic and variable association are stored in an xml file.

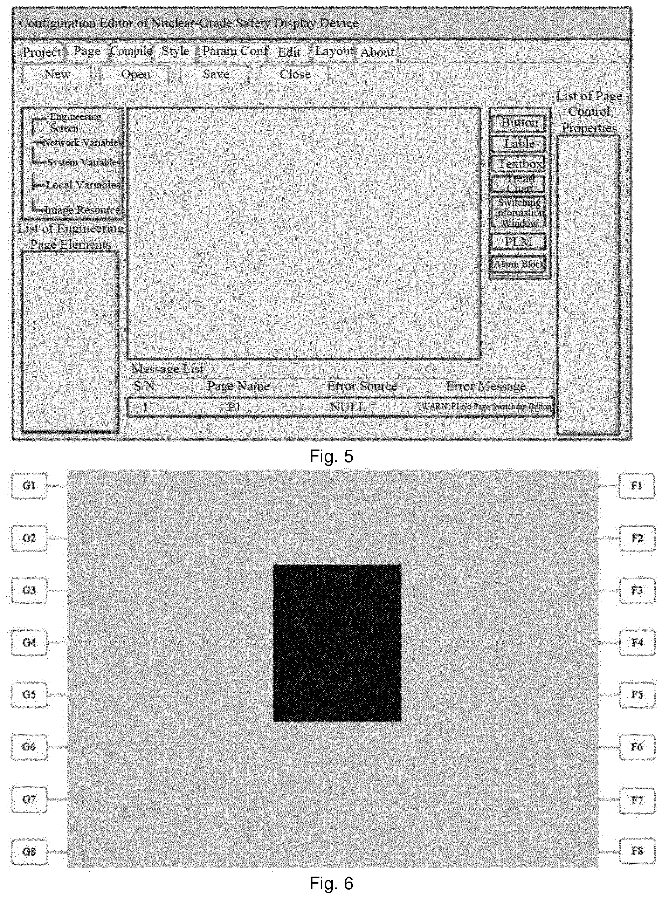

Fig. 5 shows the layout of the configuration editor, which provides functions of canvas, engineering management, page management, icon library management, control management, error and element list information display, and general menu bar.

Fig. 6 shows the canvas of the configuration editor, and G1-G8/F1-F8 on the left and right sides correspond to physical keys of the physical machine or analog machine, so as to realize the auxiliary positioning during page configuration.

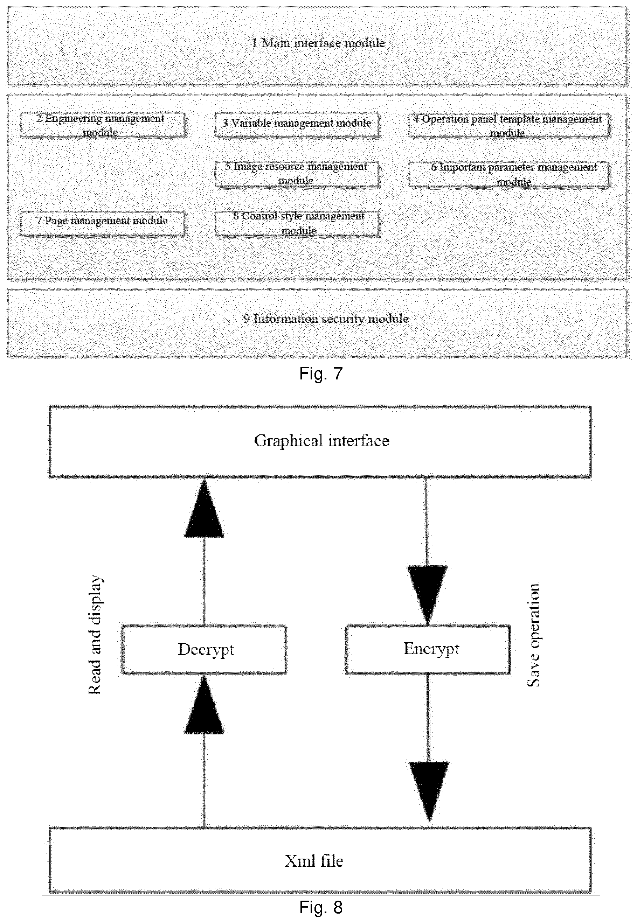

The specific functions of the configuration editor are shown in Fig. 7. The configuration editor includes:

### 1) Main interface module

The main interface module provides a window for global view and operation of the configuration editor.

### 2) Engineering management module

The engineering management module provides the functions of engineering directory management, page organization, variable and icon resource entry management.

### 3) Variable management module

The variable management module provides the creation of variables and the configuration of initial values, effective values, alarms and other information.

### 4) Operation panel template management module

The operation panel template management module provides the creation and configuration of standard or non-standard device operation panels.

### 5) Image resource management module

The image resource management module provides the icon import and icon library management required by users.

### 6) Important parameter management module

The important parameter management module provides the parameter configuration management of PLM group and alarm data.

### 7) Page management module

The page management module provides the creation, modification, deletion and configuration of engineering configuration pages.

### 8) Control style management module

The control style management module provides the style editing of different types of controls. Being edited and saved, these styles may be used as users' design resources to quickly design configuration pages in different engineering configuration pages or different engineering projects.

### 9) Information security module

The information security module encrypts and decrypts engineering files, configuration files, variable files and other related information of a configuration project on the premise of ensuring data authenticity and integrity, and the algorithm is AES256.

In the running process the configuration editor frequently displays graphical interface and accesses xml files, with the interactive logic shown in Fig. 8.

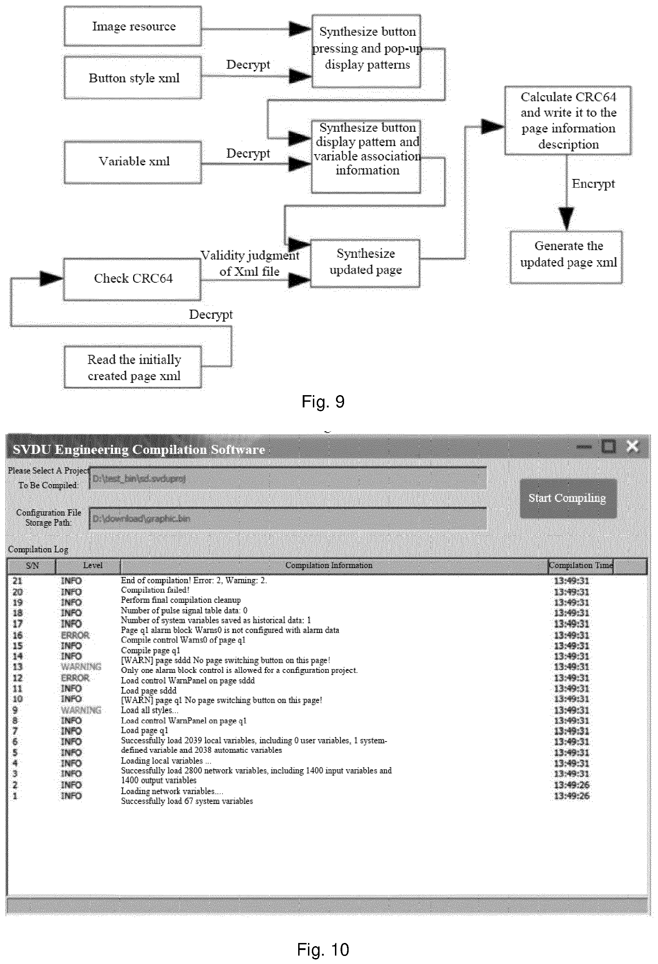

Fig. 9 shows the process of configuration update after creating an engineering configuration page. Based on the judgment of the CRC64 check code of the pregenerated page xml file and the encryption and decryption operations of xml data, the behavior of malicious modification of the page by unauthorized users or incorrect modification of the page by authorized users can be effectively prevented, which avoids the condition that the configuration compiler reads configuration parameters unexpectedly, resulting in abnormal operation of physical machine, analog machine and configuration simulators by using illegal configuration data.

### 3. Configuration compiler

The configuration compiler is designed according to the configuration data construction method, and converts the xml files such as engineering pages and variables generated by the configuration editor into configuration data, as shown in Fig. 10.

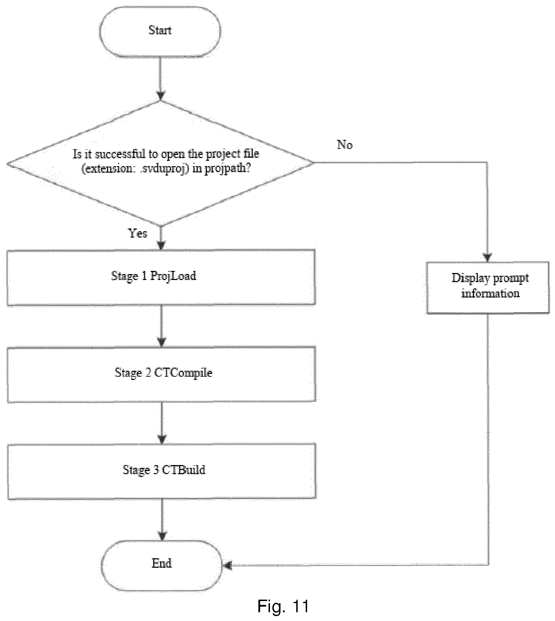

During the execution of the configuration compiler, the configuration data are generated through three processing stages, as shown in Fig. 11.

The functions and processes of each stage in Fig. 11 are given as follows:

### 1) Stage 1 ProjLoad

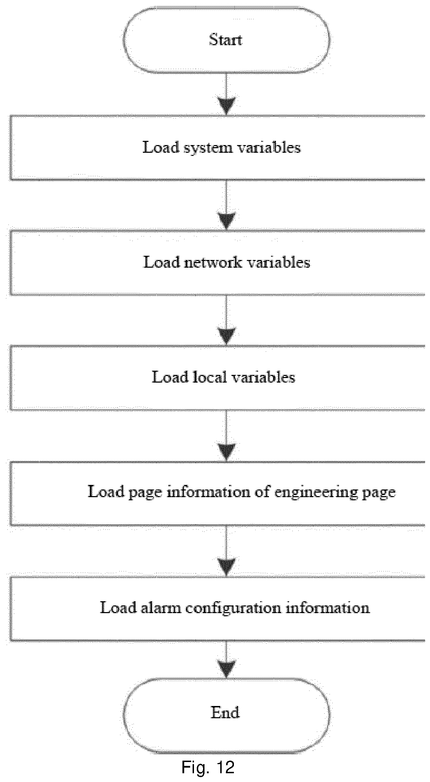

In this stage, the engineering xml data file is loaded into a memory, as shown in Fig. 12; and the decryption operation of xml data files is carried out in the process of data loading.

### 2) Stage 2 CTCompile.

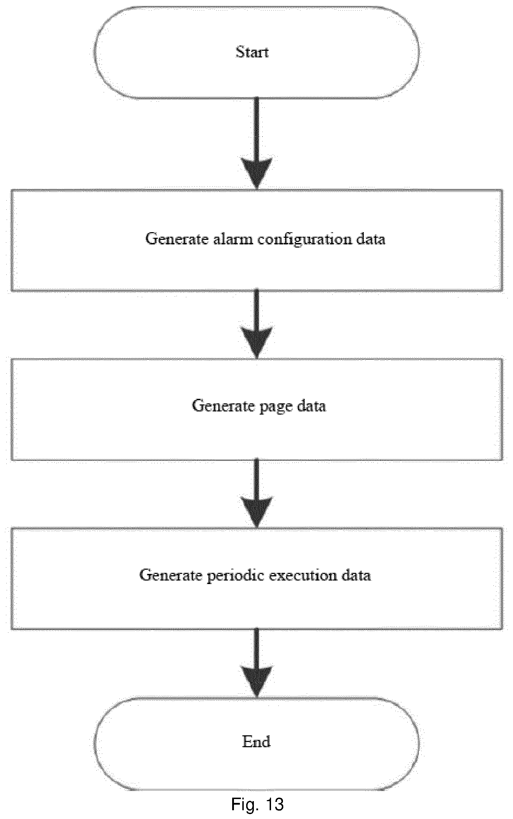

In this stage, the data loaded in "Stage 1 ProjLoad" will be further checked, and all kinds of data obtained in the previous loading process will be converted into those that can be saved in "Configuration Data" according to the data format agreed by the configuration data construction method. The execution flow of this stage is shown in Fig. 13.

### 3) Stage 3 CTBuild

In this stage, the data generated in "Stage 2 CTCompile" are written into a specified binary file as required by the configuration data construction method.

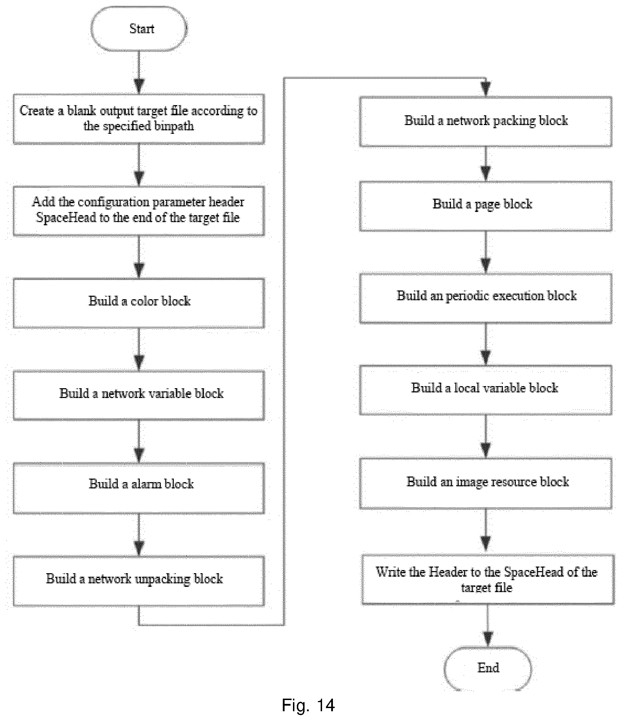

The final configuration data are composed of a plurality of "blocks" as required by the configuration data construction method. In the "Stage 2 CTCompile", as the data required by "blocks" have already been prepared, the main task is to write these data into a specified file and to complete the work that is not appropriately done in the previous stages, so as to finally complete the compilation and conversion of configuration engineering data. The execution flow of this stage is shown in Fig. 14.

### 4. Configuration parser

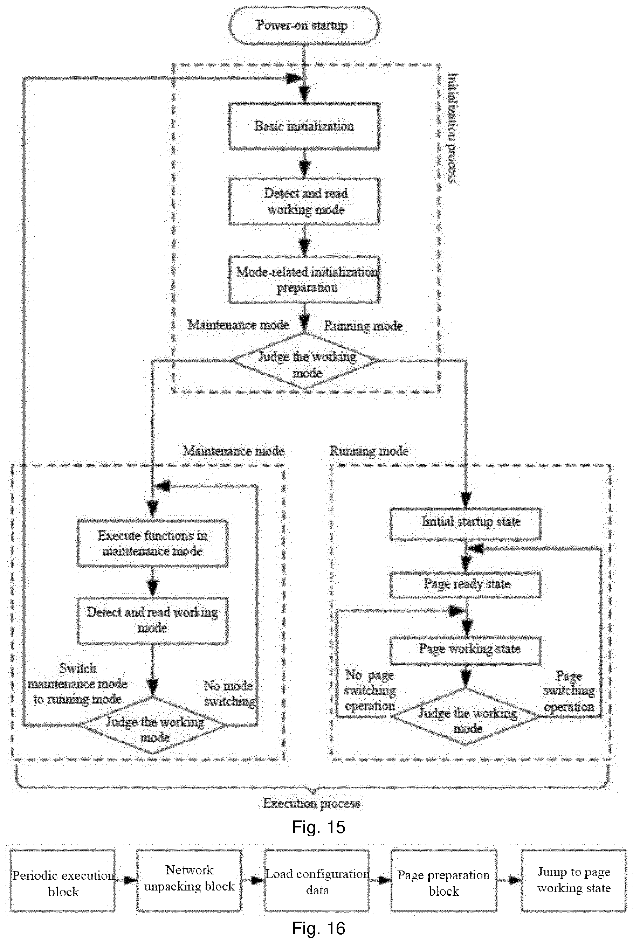

The configuration parser is a functional component designed according to the configuration data construction method, and may be deployed in a physical machine or an analog machine to parse the configuration data. The running process of the configuration parser after power-on startup is shown in Fig. 15.

The configuration parser experiences two processes after power-on:

### 1) Initialization process

The configuration parser executes the initialization process, makes basic initialization settings such as hardware and configuration, and determines the working mode after power-on or when the maintenance mode is switched to the running mode.

### 2) Execution process

The execution process consists of a maintenance mode and a running mode, which are mutually exclusive and can be switched by a mode switch. Specifically:

### Maintenance mode

The maintenance mode provides simple local parameter setting and configuration data downloading, and can be executed indefinitely when no mode switching is performed.

### Running mode

The running mode provides control and scheduling of application logic behavior of a physical machine and an analog machine, and can realize an infinite loop function. The running mode consists of three stages: initial startup state, page ready state and page working state.

In the "Initial Startup State", the initialization of configuration page configuration is executed; when the execution ends, the "Initial Startup State" moves to the "Page Ready State" unconditionally.

The "Page Ready State" executes the preparation work when "Switching a Page to the Current Page". When the execution ends, the "Page Ready State" moves to "Page Working State" unconditionally. In the "Page Ready State", the work such as periodic execution block, network unpacking, configuration data loading and page display preparation is executed. The specific business process is shown in Fig. 16.

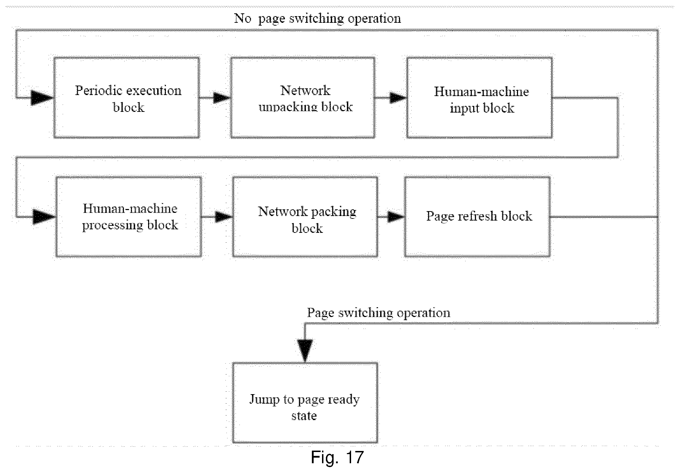

The execution flow of "Page Working State" is shown in Fig. 17.

Without page switching operation, the "Page Working State" runs indefinitely until the page switching operation occurs, and moves to the "Page Ready State".

Without page switching operation, the "Page Working State" periodically acquires network data and human-machine input, and converts these inputs into specific operations such as data storage, engineering page display update, and network data output.

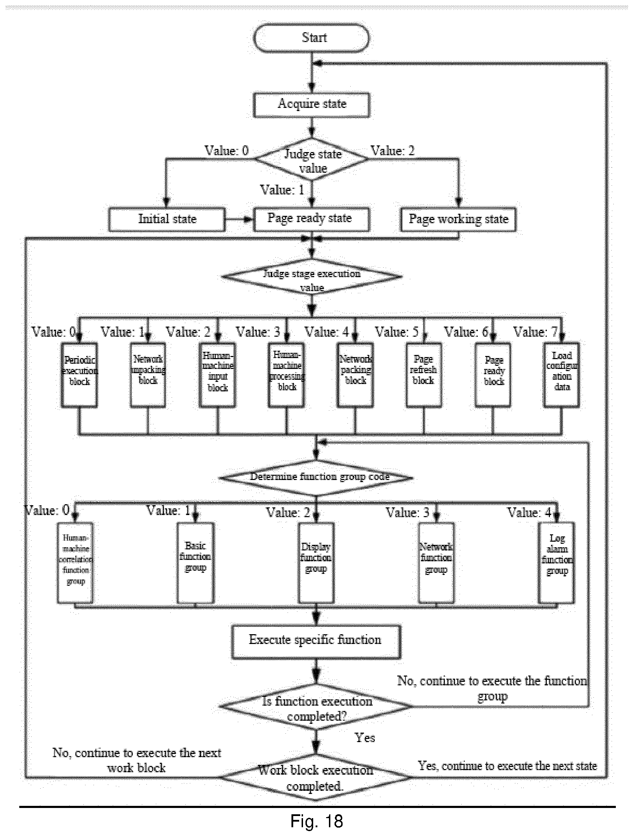

The parsing flow of configuration data by the configuration parser is shown in Fig. 18.

The configuration parser allows for the combined operation of data elements, function FunID, function Fun parameters and calling relations in configuration data by means of conditional branching, cycle, parameter decoding and parameter transmission according to the flow shown in Fig. 18; and finally, the basic function Fun truly restores the functions of engineering configuration page display and refresh, data access, logic control, variable association, network variable sending and receiving in real time.

### 5. Configuration simulator

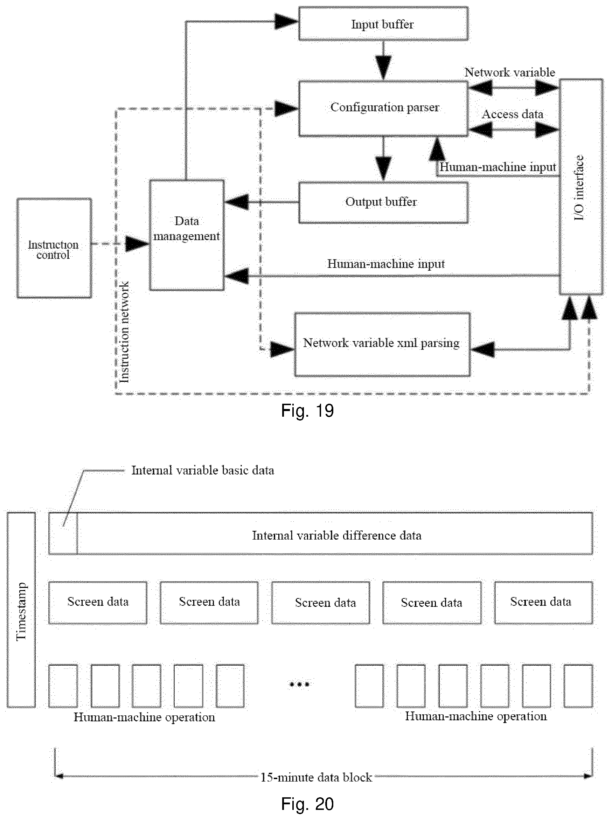

The configuration simulator parses the configuration data generated by the configuration compiler and executes the simulation running of the same. The configuration simulator simply verifies the engineering configuration page when running on a general personal computer; whereas, the configuration simulator has the ability to record the process data of simulation running for a long time and to repeat the historical process of simulation running when running on a specific micro X86 mainboard and equipped with an integrated seismic structure. _{\}Fig. 19 illustrates the overall architecture of the configuration simulator which consists of the configuration parser, the instruction control module, the data management module, the I/O buffer, the network variable xml parsing module and the I/O interface.

### 1) Instruction control module

The instruction control module allows for different analog simulation by controlling and scheduling the data management module, the configuration parser, the network variable xml parsing module and the I/O interface.

### 2) I/O interface

The I/O interface simulates the hardware functions of physical machines such as storage, communication and human-machine input device, and timer.

### 3) Data management module

The data management module provides partitioned storage and management of long-period running process data (e.g. human-machine input, engineering page display, trend and fault logs, and memory variables) of the configuration parser, which can be reloaded to run in the configuration parser, so as to reproduce the historical running process.

### 4) Network variable xml parsing module

The network variable xml parsing module decrypts the network variable xml file generated by the configuration editor and executes the following two functions: presenting the output network values generated by the configuration parser in a visual list to monitor the output network variables, and presenting the input network variables in a visual list and allowing to be input, so as to implement the simulation intensity modulation function of the input network variables.

### 5) I/O buffer

The input buffer temporarily stores the data synthesized by the data management module and understood by the configuration parser, while the output buffer temporarily stores the process or variable data periodically generated by the configuration parser.

The data generated by the configuration parser is subdivided into internal variable data, engineering page data and human-machine operation. The data generated periodically by the configuration parser can be stored for a long time by the differential storage mode shown in Fig. 20.

In Fig. 20, the data generated by the configuration parser are divided into 15-minute data blocks, each of which contains simulation timestamp, basic data of internal variables, change data per minute, engineering page data per minute cycle, and human-machine operation data captured in each running cycle within 15 minutes.

The differential data are re-synthesized as follows:
From a specific 15-minute moment as the starting point of calculation, the basic data of internal variables at a specific 1-minute moment are calculated by means of the basic data of internal variables at this moment and the change data per minute;
The configuration simulator is driven to replay the historical running process according to the basic data of internal variables, the engineering page data and the human-machine operation data recorded cycle by cycle at a specific 1 -minute moment calculated from the previous step.

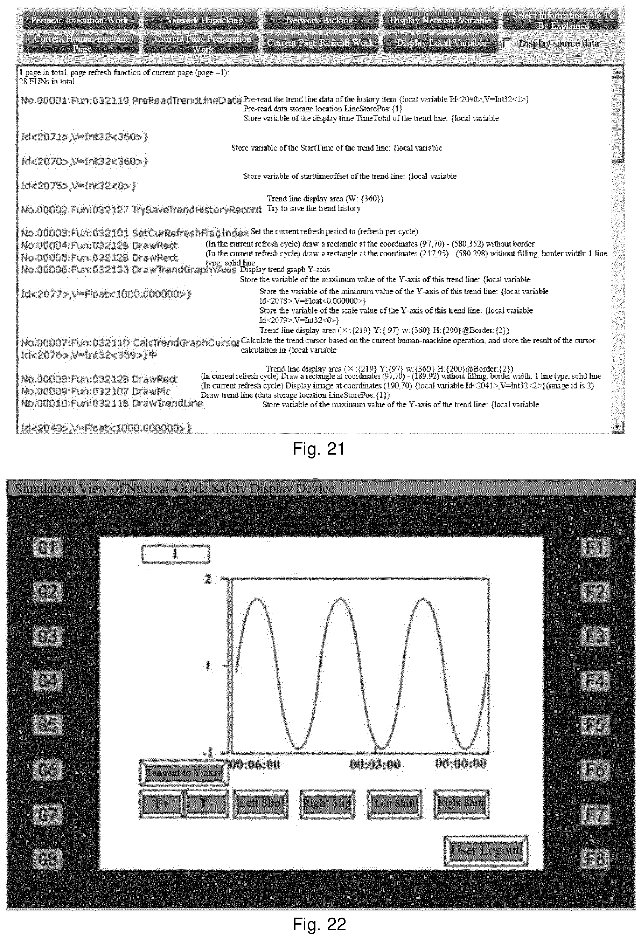

As shown in Fig. 21, the running information display window of the configuration simulator shows the detailed process information such as page number, function Fun and variable information for parsing running of the configuration data during the running of the configuration simulator.

As shown in Fig. 22, the configuration simulator running view shows the simulation of the controls used for monitoring the running trend of variables.

The configuration simulator has two working modes, i.e. engineering configuration page verification and analog machine.

### 1) Engineering configuration page verification mode

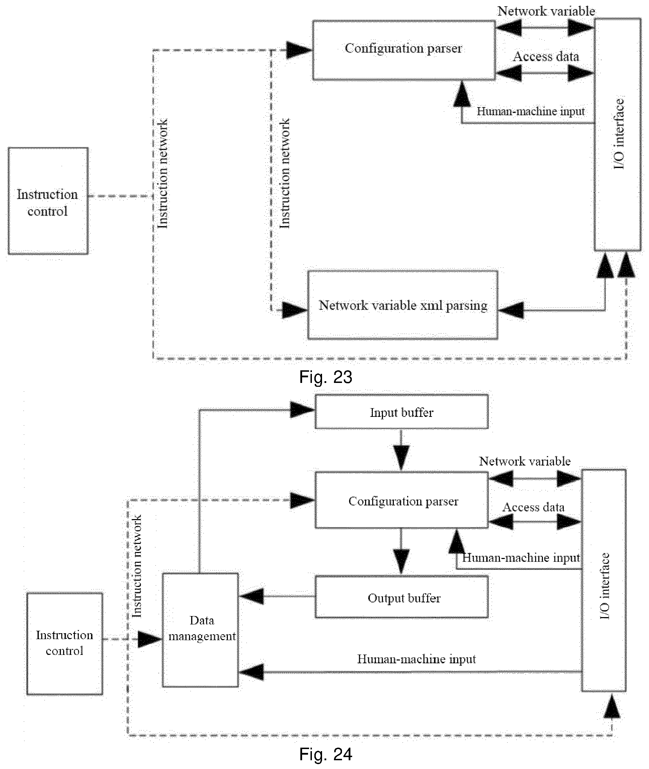

In this mode, the internal data flow of the configuration simulator is shown in Fig. 23.

This mode is executed according to the following process:
the "Instruction Control Module" sends out a working instruction of "Engineering Configuration Page Verification";
the "Network Variable xml Parsing Module" graphically presents lists of received and sent network variables, wherein the list of received network variables provides a dynamic monitoring function and the list of sent network variables provides a simulation intensity modulation function; and
the "I/O Interface" simulates physical keys, resistive touch screen, network communication and data access in the form of software and data.

### 2) Analog machine mode

In this mode, the internal data flow of the configuration simulator is shown in Fig. 24.

This mode is divided into a simulation running stage and a replay running stage based on the chronological order.

### a) Simulation running stage

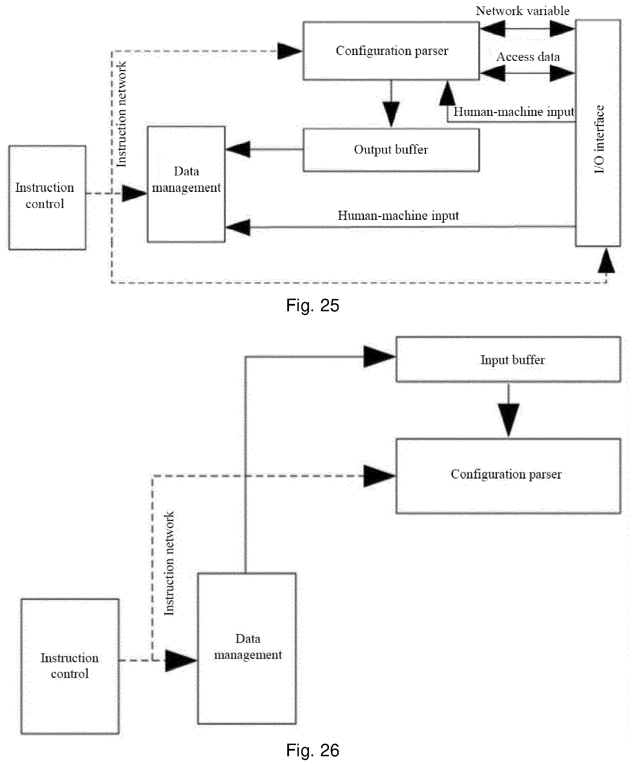

During the simulation running, the configuration simulator has the same logical behavior and time characteristics as the physical machine, and the difference lies in that the process data generated periodically by the configuration parser are sent to the output buffer and stored there. Fig. 25 shows the data flow in the simulation running stage.

The simulation running process is as follows:
the "Instruction Control Module" sends out a working instruction of "Simulation Running";
upon receiving the instruction, the "Configuration Parser" periodically parses and executes the configuration data, and the process data such as memory variables are periodically sent to the output buffer for storage;
upon receiving the instruction, the "I/O Interface" reads the human-machine input and network variable input of the integrated seismic structure, sends the network variable and the human-machine input to the configuration parser and the "data management module", and provides memory access simulation; and
upon receiving the instruction, the "Data Management Module" periodically stores the data in the human-machine input and output buffer.

### b) Replay running stage

In the replay running stage, the configuration parser reloads the process data including human-machine inputs and memory variables stored in the simulation running stage to reproduce historical processes, data, and operations in the simulation running stage. Fig. 26 illustrates the data flow in the replay running stage.

The specific process during replay running is as follows:
the "Instruction Control Module" sends out a "Replay Running" instruction;
the "Data Management Module" synthesizes the stored process data such as human-machine input and memory variables and periodically loads such data into the input buffer; and
the "Configuration Parser" periodically loads the input buffer data, and relies on these data to replay the historical running processes, states and operations.

### Embodiment 2

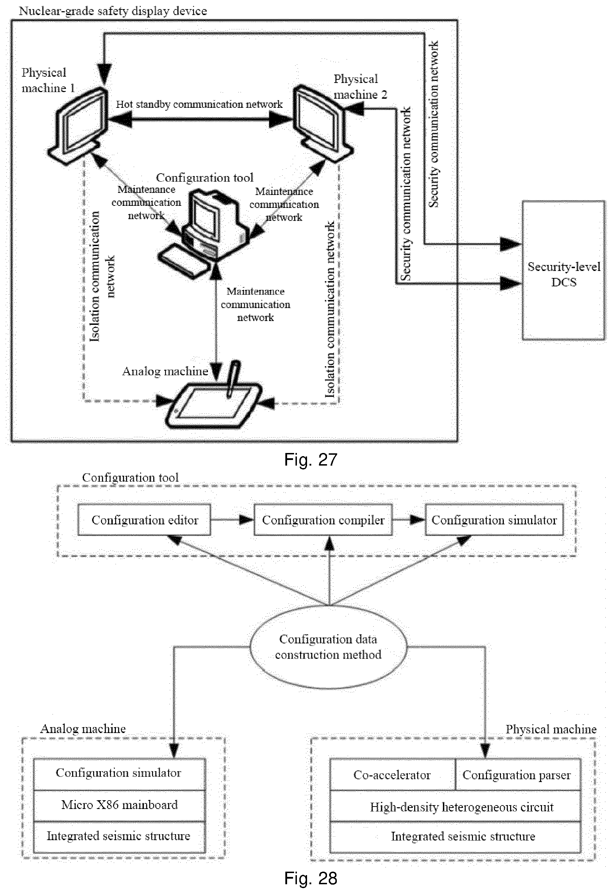

This embodiment proposes a nuclear-grade safety display device on the basis of the configuration-parsing system in Embodiment 1. As shown in Fig. 27, the nuclear-grade safety display device includes three main parts: an upper computer (configuration tool), an analog machine and a physical machine.

The configuration tool, the analog machine and the physical machine are connected by different communication means to implement the following business functions:
1) the configuration tool configures offline engineering page and downloads the generated configuration data to the physical machine and the analog machine via the maintenance communication network;
2) the physical machine is interconnected with the security-level DCS via the security communication network to provide the functions of engineering page display, human-machine interaction, data storage and data communication;
3) the physical machines implement the exchange of human-machine input data and state information data via the hot standby communication network, and further implement the hot standby collaboration;
4) the analog machine parses and simulates the configuration data, records the running process data, and implements the functions of collection and analysis of operation and maintenance data, and accident replay; and
5) the physical machine transfers human-machine input data and network data to the analog machine via an isolation communication network to further implement the simulation collaboration.

In this embodiment, the physical machine, the analog machine and the configuration tool are designed according to the configuration data construction method, wherein the configuration tool consists of a configuration editor (the configuration editor proposed in Embodiment 1), a configuration compiler (the configuration compiler proposed in Embodiment 1) and a configuration simulator (the configuration simulator proposed in Embodiment 1); the physical machine consists of a co-accelerator, a configuration parser (the configuration parser proposed in Embodiment 1), a high-density heterogeneous circuit, and an integrated seismic structure; and the analog machine consists of a configuration simulator (the configuration simulator proposed in Embodiment 1), a micro X86 mainboard and an integrated seismic structure. Fig. 28 illustrates the internal logical relationship among the configuration tool, the physical machine and basic components of the analog machine.

### 1. Integrated seismic structure

In this embodiment, the physical machine and the analog machine are of an integrated seismic structure and are identical.

The integrated seismic structure at least includes a housing, a pressing plate, a screen assembly, a circuit board, a power module, a filter module and an interface, wherein the housing includes a front panel and a rear cover plate which are fixed with screws, and the housing and the pressing plate are made of aluminum alloy and are integrally formed by CNC milling, resulting in high overall structural strength and high natural frequency; therefore, the seismic capacity and anti-vibration capability of the device can be effectively improved.

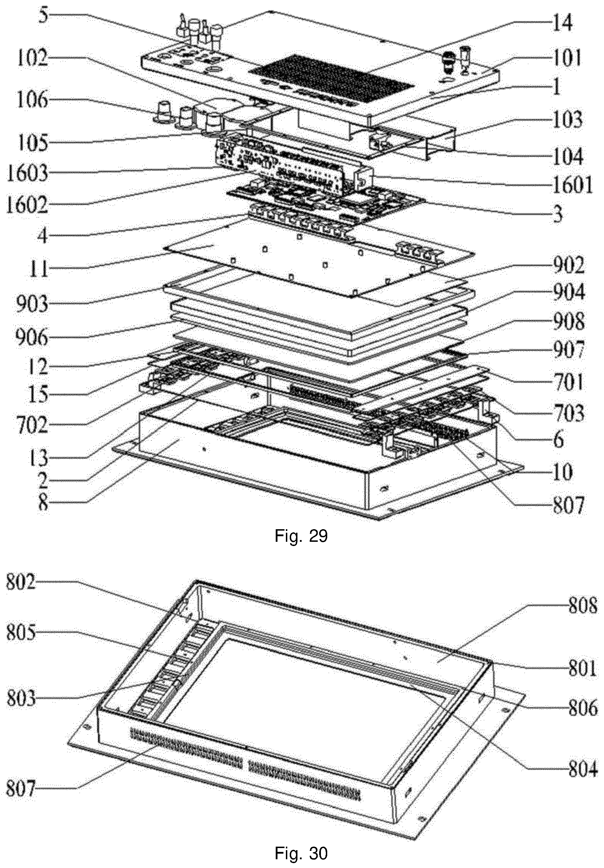

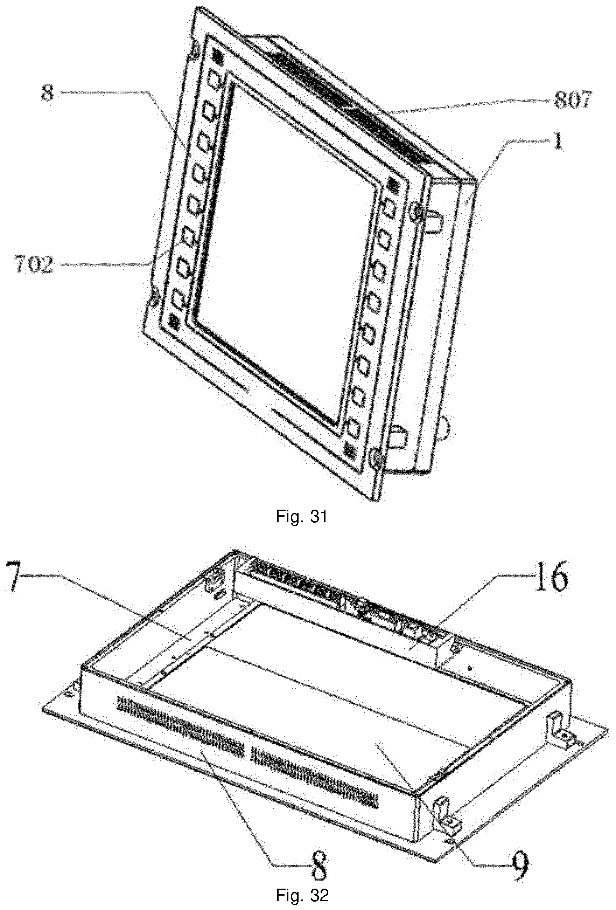

As shown in Fig. 29-32, the integrated seismic structure includes a rear panel 1, a pressing plate 11 arranged below the rear panel 1, and a front panel 8 arranged below the pressing plate 11; the rear panel 1 is fixedly connected with the front panel 8 to form a housing; a main processing circuit board 3 is arranged on the panel of the pressing plate 11; a screen assembly 9 is arranged between the pressing plate 11 and the front panel 8 in such a manner that the screen assembly 9 is set inside the front panel 8 and fixed with the front panel 8 by means of at least one second shock-absorbing pad 13 in Z direction and one third shock-absorbing pad 12 in XY direction and that the pressing plate 11 is pressed on the screen assembly 9 by a pressing device, so that the shock-absorbing pad and the conductive rubber can be elastically deformed.

Based on the integrated seismic structure, with the power module fixed to the rear cover plate 101, the power module 103 transfers heat to the rear cover plate 101, and the heat of LCD904 is led to the pressing plate 11 by a thermally conductive material 902; and the heat on the pressing plate 11 is conducted to the outside of the device by natural convection via a 3mm×22mm strip air inlet 14 arranged on the rear cover plate 101 and a 3mm×6mm strip air outlet 807 arranged on the upper side of the front panel 8; wherein the heat dissipation of the device is achieved by heat transfer and natural convection.

Shielding measures: the front panel 8, the rear panel 1 and a shielding glass 906 form a complete shielding cavity; a gap between the front panel 8 and the rear cover plate 101 is filled with a second conductive rubber 2 to achieve a close contact, and a gap between a second fixed cavity 802 and a complete metal surface of a keypad 7 is filled with a third conductive rubber 15 to achieve a close contact; an inner surface of the air outlet 807 is provided with a first shielding screen 10 for electromagnetic shielding, and an inner surface of the air inlet 14 is provided with a second shielding screen 5 for electromagnetic shielding; and all other interfaces are shielded by shielded connectors. The gaps filled with conductive rubbers are positioned and contacted by a labyrinth structure.
1) Installation of screen assembly: the second shock-absorbing pad 13 is attached to the bottom surface of a first fixed cavity 801 and the third shock-absorbing pad 12 is attached to the side thereof; a touch screen 908 is placed in such a manner that the front surface (operation surface) of the touch screen 908 is closely attached to the second shock-absorbing pad 13 and the third shock-absorbing pad 12; the first shock-absorbing pad 907 is attached to the back of the touch screen 908; a nonconductive surface of the shielding glass 906 is attached to the first shock-absorbing pad 907; a first conductive rubber 905 is attached to a conductive surface of the shielding glass 906 and overlapped on a first step 803 in the first fixed cavity 801; a pressing frame 903 is installed on a second step 804 in the first fixed cavity 801; a visible surface of LCD904 is tightly attached to the shielding glass 906; after the thermally conductive material 902 is installed on the back of the LCD904, the pressing plate 11 is fixed to the pressing frame 903 with screws and a trunking cover plate 4 is installed on a screen pressing plate 11 with screws.
2) Installation of circuit board and shielding screen: a keycap 702 is installed in the second fixed cavity 802 on which the key silicone pad 703 is overlaid; the third conductive rubber 15 is attached to a third step 805 in the second fixed cavity 802; a keyboard circuit board 701 and the key silicone pad 703 are fixed to the second fixed cavity 802 with screws, so that the keyboard circuit board 701 is in close contact with the third conductive rubber 15; the main processing circuit board 3 is fixed to the pressing plate 11 with screws; and the first shielding screen 10 is fixed to an inner surface of the air outlet 807 with screws and a first screening mesh batten 5.
3) Wiring: internal wirings of the device are correspondingly connected to plugs, and different wirings such as signal lines and power lines are correspondingly arranged in a trunking 4 fixed with screws, according to the electrical wiring specifications.
4) Installation of rear panel: the power module 103, the filter module 102 and the power interface 106 are fixed with screws or nuts at the corresponding positions on the rear cover plate 101 with screws or nuts; a second screening mesh 105 is fixed to an inner surface of the air inlet 14 with screws and a second screening mesh batten 104; the second conductive rubber 2 is attached to a fourth step 806 of the front panel 8; and the rear cover plate 101 is fixed to the front panel 8 with screws, so that the rear cover plate 101 is in close contact with the second conductive rubber 2.
5) Installation of interface module: the interface module circuit board 1602 is fixed to the interface module installation block 1601, and the interface module 16 is fixed to an inner wall 808 of the front panel 8 by means of an interface module connector 1603.

### 2. High density heterogeneous circuit

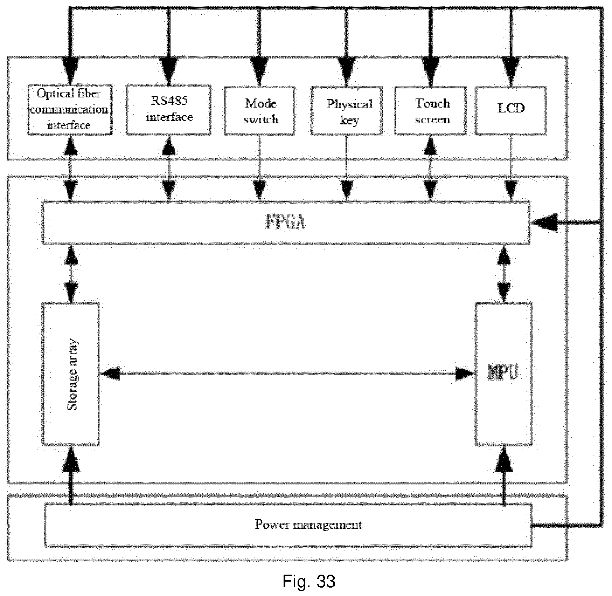

As shown in Fig. 33, the high-density heterogeneous circuit is a hardware entity that carries various services of the physical machine.

MPU and FPGA are interconnected by parallel buses to form a heterogeneous controller group, wherein the MPU is a hardware entity that carries the configuration parser service and the FPGA is a hardware entity that carries the co-accelerator service.

The storage array stores configuration data, log data and trend curve data, and is interconnected with the FPGA and the MPU by means of parallel buses to implement the dual master control time-sharing access mechanism.

An optical fiber communication interface, a RS485 interface, a mode switch, an independent keyboard, a touch screen and an LCD are hooked up to the FPGA. There are 5 (five) optical fiber communication interfaces, with 3 (three) for the maintenance downloading and security communication services and 2 (two) for the hot standby communication service between physical machines, and 1 (one) RS485 for isolation communication service of the analog machine; the keys and the resistive touch screens constitute a diversified human-machine input device; the LCD implements the engineering page display function; and the mode switch determines the current working state.

The power management module provides redundant energy supply service for functional components of the physical machine.

### 3. Co-accelerator

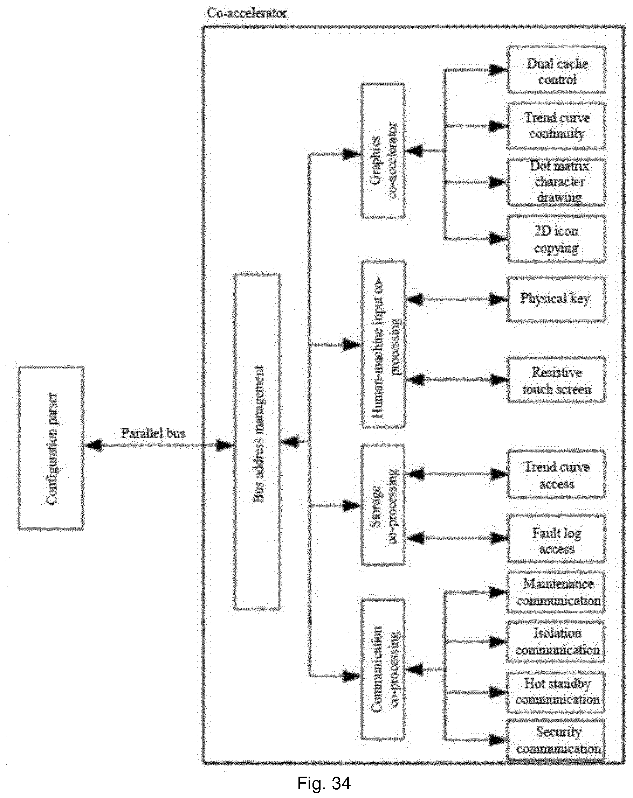

The co-accelerator is carried by the FPGA and deployed in the physical machine, and implements the co-accelerated processing of graphics, communication, human-machine input, storage and other functions related to the configuration parser described in Embodiment 1, with the architecture shown in Fig. 34.

The parameters and instructions required by the co-accelerator are mapped into a continuous section of register address space; and the data space required by the co-accelerator is mapped into a continuous section of storage address space. The configuration parser sends out the co-acceleration instructions and parameters by means of parallel buses, acquires the running state and data of the co-accelerator as well as the co-acceleration instructions and parameters of the configuration parser by means of the buses, further calls own bottom module to implement specific functions, and feeds the acquired external data and own state back to the configuration parser.

In Fig. 34, the co-accelerator includes five units, i.e. bus address management unit, graphics co-acceleration unit, human-machine input co-processing unit, storage co-processing unit, and communication co-processing unit. The specific functions are as follows:

### 1) Bus address management unit

The bus address management unit unloads data and instructions from the parallel bus and converts the same into trigger signals and parameters of functional units at the later stage; at the same time, the bus address management unit can also transfer the state and data of functional units to the parallel bus.

### 2) Graphics co-acceleration unit

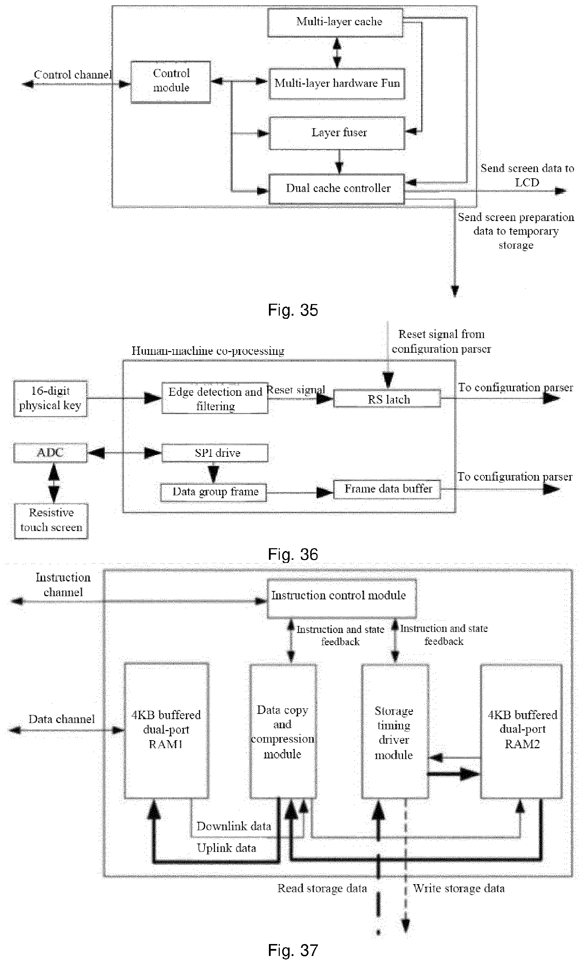

Objects of the graphic co-acceleration unit include 2D icon copying, trend curve continuity, dot matrix character drawing and dual cache control, which can generate image data required by the configuration parser and drive LCD to display the data by means of co-acceleration. The architecture of the graphic co-acceleration unit is shown in Fig. 35.

The functions of each module in Fig. 35 are as follows:
the control module triggers the multi-layer hardware Fun, the layer fuser and the dual cache controller to cooperatively generate image data and update LCD display data according to the input control instructions and parameters.

The instructions provided by the control module include dot matrix character drawing, trend curve continuity, 2D icon copying, layer fusion and display-drawing dual cache switching.

The multi-layer cache is a buffer storage matching the multi-layer hardware Fun, and temporarily stores icon data. The multi-layer hardware Fun integrates three independent layer control units, i.e. a dot matrix character drawing unit, a trend curve continuity unit and a 2D icon copying unit, in which each monopolizes a continuous address space in the multi-layer cache as own temporary cache of image data.

The multi-layer hardware Fun allows three instructions from the control module to be executed in parallel.

According to the instruction of the control module, the layer fuser integrally fuses the image data of different areas in the multi-layer cache into a complete image data, and sends the same to the dual cache controller.

According to the instruction of the control module, the layer fuser can further send part of the image data in the multi-layer cache to the dual cache controller to update the local data.

The dual cache controller provides a ping-pang control for two independent physical storage devices, which alternately implement the functions of engineering page data caching and display data caching in a time-sharing manner.

The engineering page data caching means that the dual cache controller temporarily writes the data from the layer fuser into the physical cache at the specified location, and these data describe the engineering page information to be displayed.

The display data caching stores LCD display pixel data, and these data describe the currently displayed engineering page information.

### 3) Human-machine input co-processing unit

The human-machine input co-processing unit provides a co-processing mechanism for diverse human-machine inputs, i.e., the unit acquires and caches coordinate data of the resistive touch screen, filters and latches input data of physical keys. The architecture of the human-machine input co-processing unit is shown in Fig. 36.

As shown in Fig. 36, the human-machine input processing flow of physical keys is as follows:
firstly, detecting the physical key input, and de-jittering by edge detection and filtering;
secondly, operating the setting end of the RS latch to latch the detection data according to the value of the previous step; and
finally, reading the RS latch data by the configuration parser and generating a reset signal to reset the latched value.

If the configuration parser does not read the RS latch data, the RS latch will continue to latch and detect the valid data input by the physical key because of the setting priority.

As shown in Fig. 36, the human-machine input processing flow of the resistive touch screen is as follows:
firstly, driving the ADC by an SPI module to collect the coordinates of the resistive touch screen in the order of Y coordinate data and X coordinate data 10 times respectively;
secondly, taking the first collected data as a frame header and placing a frame header flag, and placing coordinate type identifiers for Y and X coordinate data respectively; and
finally, storing group and frame data in the cache for query by the configuration parser.

### 4) Storage co-processing unit

The storage co-processing unit implements the access co-processing of alarm log data and network variable trend data collected by the configuration parser, with the architecture of storage co-processing unit shown in Fig. 37.

The functions of each module in Fig. 37 are as follows:
The instruction control module decodes the co-processing instructions or parameters from the configuration parser, outputs the current co-processing execution state and feeds the same back to the configuration parser. Furthermore, the instruction control module schedules the data copy and compression module and the storage timing driver module according to the decoded instructions and parameters, and receives a state feedback.

The data copy and compression module implements data copy operation between the 4KB buffered dual-port RAM1 and the 4KB buffered dual-port RAM2, compresses logical data into physical data when copying downlink data, and compresses physical data into logical data when copying uplink data.

The storage timing driver module provides physical storage access timing, copies data from the 4KB buffered dual-port RAM2 and writes the same into the physical storage when executing the downlink data operation, and writes the data from the physical storage into the 4KB buffered dual-port RAM2 when executing the uplink data operation.

The 4KB buffered dual-port RAM1 provides a data channel between the configuration parser and the storage co-processing unit, which get access to the 4KB buffered dual-port RAM1 in a time-sharing manner.

The 4KB buffered dual-port RAM2 provides a data channel between the data copy and compression module and the storage timing driver module, which get access to the 4KB buffered dual-port RAM2 in a time-sharing manner.

### 5) Communication co-processing unit

The communication co-processing unit provides four kinds of communication link management: maintenance communication link management for realizing cold standby maintenance communication functions, that is, the optical fiber link 1 or the optical fiber link 2 can be selected for maintenance communication between the physical machine and the configuration tool by means of parameter setting; the communication co-processing unit provides isolation communication link management, the isolation communication between the physical machine and the analog machine is implemented by means of a RS485 link. The communication co-processing unit provides hot standby communication link management, that is, the hot standby communication between the physical machines is implemented by means of two optical fiber links. The communication co-processing unit provides security communication link management, that is, the security communication between the physical machine and the security-level DCS is implemented by means of two hot standby redundant optical fiber links.

### 4. Hot standby collaboration mechanism

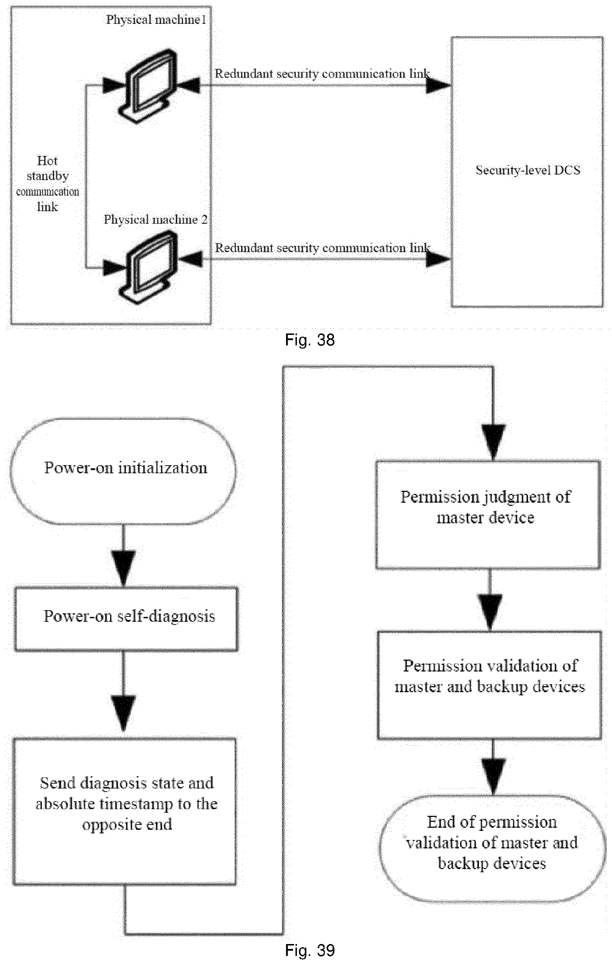

The hot standby collaboration mechanism is implemented by two physical machines through hot standby communication and hot standby switching. The physical machine 1 and the physical machine 2 are respectively connected with the security-level DCS via redundant safety communication links, as shown in Fig. 38.

In Fig. 38, one of the physical machine 1 and the physical machine 2 is called the master device and the other is called the backup device. The master and backup devices are relative concepts, with the working permission allowed to switch between the two in the running process, and are provided with the same hardware, software and configuration data.

The hot standby collaboration mechanism includes the following three processes:

### 1) Power-on startup process

In the power-on startup process, the initial permissions of the master and backup devices are determined by two mechanisms, i.e. first start-up judgment and mutual fault judgment between physical machines; in other words, the physical machine that starts first and has no fault automatically obtains the master device permission. See Fig. 39 for specific steps.

In Fig. 39, the permissions of the master and backup devices are judged according to the time difference that must exist when the physical machine 1 and the physical machine 2 are powered on and started, which is greater than the diagnosis state transmission time, in combination with the actual diagnosis result. Taking the physical machine 1 as an example, the criteria for determining the permissions of the master and backup devices are explained as follows:
when the self-diagnosis of the physical machine 1 ends, the self-diagnosis state of the physical machine 1 is normal and that of the physical machine 2 has not been received, in which case the physical machine 1 obtains the master device permission;
when the self-diagnosis of the physical machine 1 ends, the self-diagnosis state of the physical machine 1 and the physical machine 2 is normal, in which case, whether the physical machine 1 has obtained the master device permission is determined according to the timestamp, i.e., if the own timestamp is smaller than an opposite end, the physical machine 1 will obtain the master device permission; otherwise the physical machine 1 will obtain the backup device permission;
when the self-diagnosis of the physical machine 1 ends, the self-diagnosis is normal and the self-diagnosis state of the physical machine 2 is abnormal, in which case the physical machine 1 obtains the master device permission; and
when the self-diagnosis of the physical machine 1 ends, the self-diagnosis state of the physical machine 1 is abnormal, in which case, the physical machine 1 obtains the backup device permission and reports a fault whether the self-diagnosis state of the physical machine 2 is received or not.

After the execution of the above criteria, there is still a certain probability that both the physical machine 1 and the physical machine 2 can obtain the mater device permission. By this time, the physical machine with larger device ID number obtains the master device permission.

### 2) Running process

The running process includes two parts: interaction between the physical machines, and interaction between the physical machines and the security-level DCS.

### Interaction between physical machines

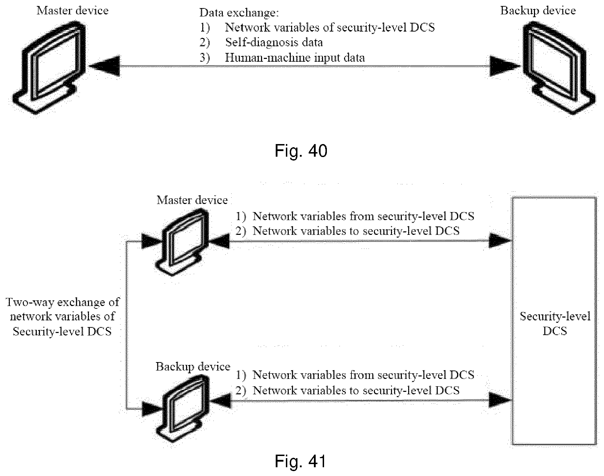

Fig. 40 illustrates interactive data in the running process after the permissions of the master and backup devices are determined.

The master and backup devices periodically exchange the network variable data received from the security-level DCS for display and storage respectively, and periodically exchange the network variable data output to the security-level DCS.

The master and backup devices periodically exchange the self-diagnosis state for switching the master and backup devices.

The master and backup devices periodically exchange human-machine input data for human-machine interaction.

In the running process, the backup device is forbidden to respond to the human-machine input, but drives page switching, operation control and other behaviors based on the human-machine input data sent by the master device. The engineering page display and human-machine response behavior of the master device will be reproduced in the backup device, showing the effect of "The Master Device Drags the Backup Device to Run".

### Interaction between master and backup devices and security-level DCS

In the running process, the master and backup devices exchange data with the security-level DCS, as shown in Fig. 41.

The master and backup devices accept network variables from the security-level DCS for their own display and storage.

The master and backup devices exchange network variables sent to the security-level DCS; and the network variables sent by the master and backup devices to the security-level DCS are identical and generated by the master device.

The network variables sent by the master and backup devices to the security-level DCS are marked with master and slave device data at the end, which are selectively used by the security-level DCS.

### 3) Switching process

The permissions of the master and backup devices are switched when the master device fails. In the switching process, the data exchange behavior between the master and backup devices, and between the master and backup devices and the security-level DCS is not affected. The specific process is as follows:
validating the permission switching when a master device fault is detected;
updating the data identification of the master and backup devices after validating that the backup device has the conditions for upgrading to the master device;
enabling own human-machine input of the backup device, and disabling own human-machine input of the master device; and
end of switching.

When the master and backup devices fail, the fault is reported as a whole, and the master/backup devices are not switched.

### 5. Simulation collaboration mechanism

The simulation collaboration mechanism consists of an analog machine and a physical machine, and intends to implement digital twinning of the physical machine in the operation and maintenance stage, including three specific functions, i.e. synchronous reproduction of human-machine interaction behavior, long-period process data recording and post-accident condition analysis, and monitoring and analysis of self-diagnosis fault data of the physical machine. The simulation collaboration mechanism is expounded by taking an analog machine and a physical machine as examples.

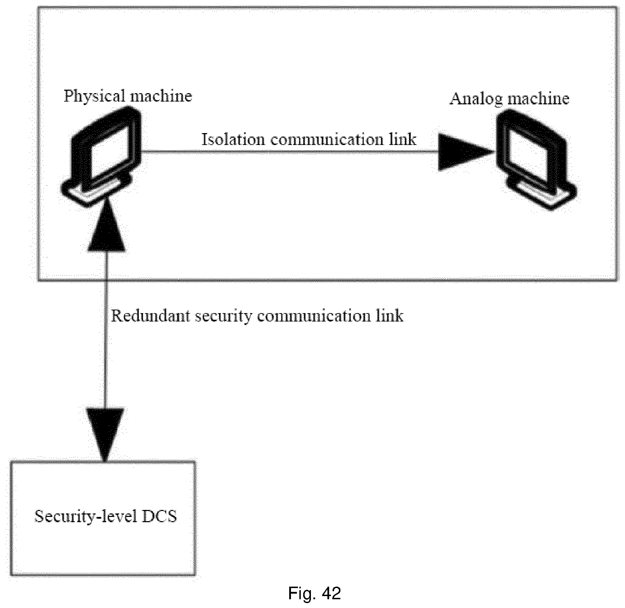

As shown in Fig. 42, on the basis of the simulation collaboration mechanism, the physical machine communicates with the analog machine in one direction by means of an isolation communication link, and communicates with the security-level DCS bidirectionally by means of redundant safety communication links.

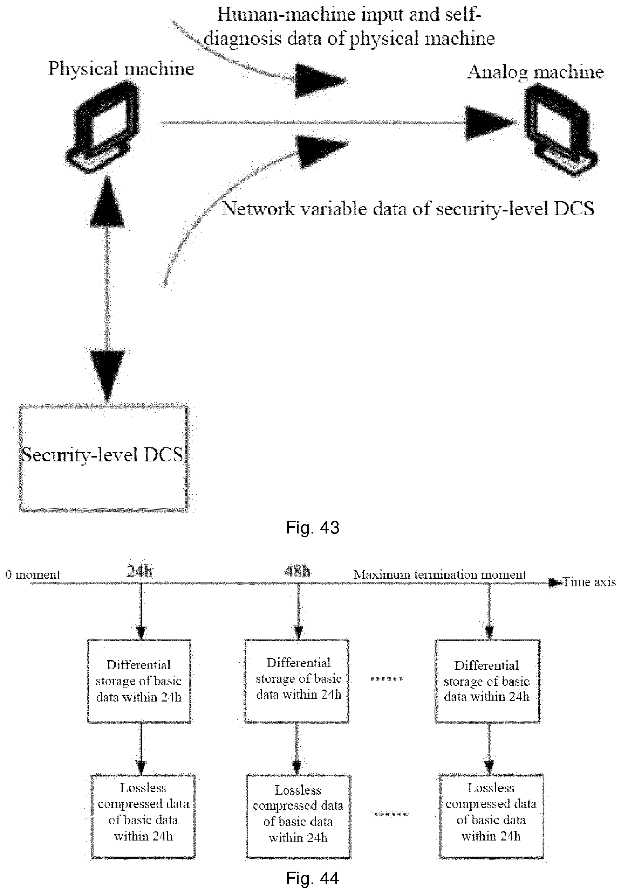

As shown in Fig. 43, the physical machine periodically sends the human-machine input data and self-diagnosis data to the analog machine, and periodically sends the network variable data from the security-level DCS to the analog machine.

The simulation collaboration mechanism has the following functions:

### 1) Synchronous reproduction of human-machine interaction behavior

When the physical machine and the analog machine use the same configuration data, the human-machine input data of the physical machine and the network variables from the security-level DCS are forwarded to the analog machine. By this time, the analog machine disables own man-machine input and uses the data from the physical machine, so as to synchronously reproduce man-machine interaction such as engineering page display and man-machine response on the physical machine in real time, which shows the effect of "The Physical Machine Drags the Analog Machine to Run".

### 2) Long-period process data recording and post-accident condition analysis

By combining the mass data storage capacity of the analog machine and the analog machine function of the configuration simulator provided in Embodiment 1, the analog machine and the physical machine run synchronously and the analog machine continuously stores process data cycle by cycle for 18 months.

The storage strategy for long-period process data records is shown in Fig. 44.

The long-period process data record is designed based on the differential storage of the data generated by the configuration parser proposed in Embodiment 1, specifically:
the differential storage data of 15-minute and 1-minute data is used as the basic data unit;
on the basis of basic data unit, the differential storage of basic data within 24 hours is constructed;
lossless compression is provided for the differential storage of basic data within 24 hours; and
when retrieved for use, data are reversely expanded step by step.

The above data are used for the following purposes:

### A. Training and teaching

In the "Replay Running" mode of the analog machine proposed in Embodiment 1, real and comprehensive state monitoring of key process projects and playback of human-machine interaction behaviors are provided for operators and operation & maintenance personnel in nuclear power or nuclear chemical industry.

### B. Post-accident condition analysis

With the calculation and analysis capability of the analog machine hardware, through adjusting a benchmark running clock timer, the obtained process data records can be quickly replayed at the running speed 1-10 times higher than the physical machine, thus assisting in the rapid analysis of post-accident conditions and the abnormal location.

### 3) Monitoring and analysis of self-diagnosis fault data of physical machine

The self-diagnosis fault data of the physical machine are sent to the analog machine for analysis and preventive maintenance judgment, and the following typical data reflecting the running state of the physical machine are monitored and analyzed:

### A. Clock-dependent instability analysis

The following physical machine data are sent to the analog machine for monitoring and analysis:
specific running time value of each cycle, in nanoseconds; and
specific running time value of each data block in a cycle, in nanoseconds.

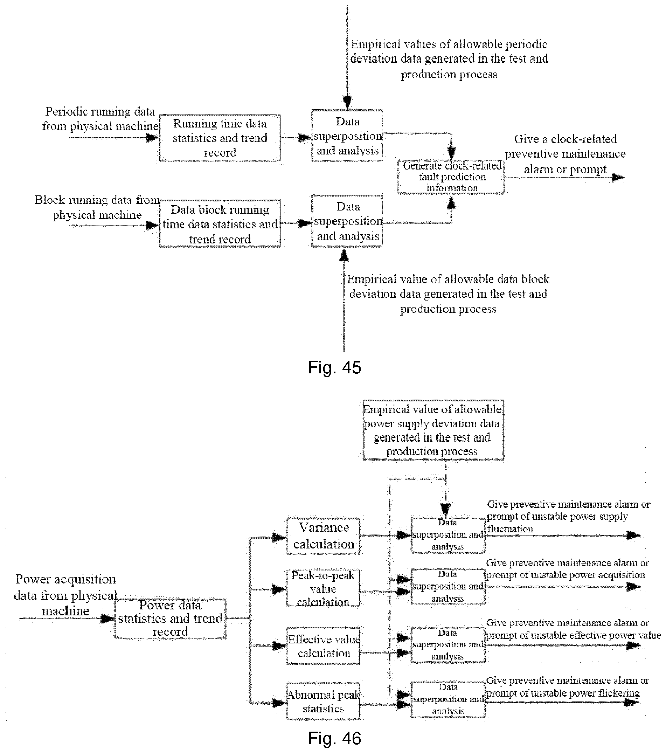

The analog machine executes clock instability analysis and gives a preventive maintenance warning according to the model shown in Fig. 45:

### B. Analysis of power supply instability

The power acquisition data used by the physical machine are sent to the analog machine for monitoring and analysis. The analog machine executes power instability analysis and gives a preventive maintenance warning according to the model shown in Fig. 46.

### C. Instability analysis of human-machine input device

The following physical machine data are sent to the analog machine for monitoring and analysis:
coordinate data of the resistive touch screen; and
delay filter parameters of physical keys.

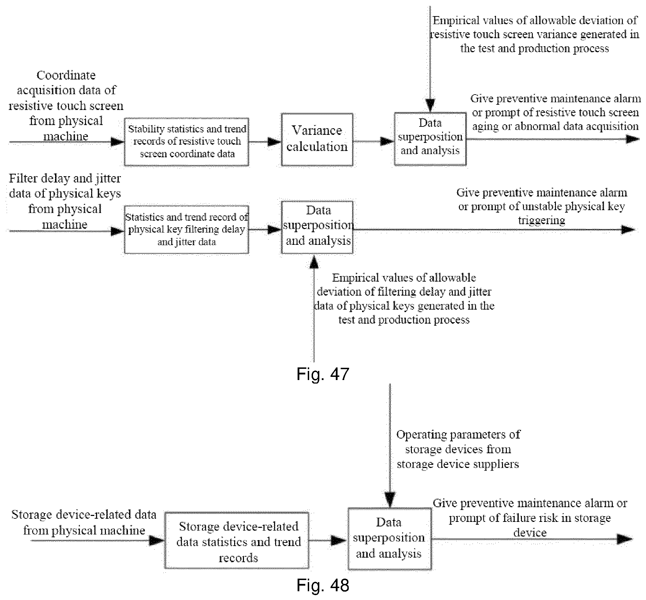

The analog machine executes instability analysis and gives a preventive maintenance warning of human-machine input device according to the model shown in Fig. 47.

### D. Instability analysis of storage device

The following physical machine data are sent to the analog machine for monitoring and analysis:
waiting time for erasing data blocks of flash devices before data are written;
repeated erasing times of a single data block of flash device before data are written once;
repeated erasing times of a single data block of a flash device.

The analog machine executes the instability analysis and gives a preventive maintenance alarm according to the model storage device shown in Fig. 48.

It should be understood by those skilled in the art that embodiments of the present invention may be provided as a method, a system, or a computer program product. Therefore, the present invention may be embodied in the form of an entirely hardware embodiment, an entirely software embodiment, or an embodiment combining software and hardware. Furthermore, the present invention may be embodied in the form of a computer program product implemented on one or a plurality of computer-usable storage media that contain a computer-usable program code(including but not limited to disk memory, CD-ROM and optical memory).

The present invention is described with reference to flowcharts and/or block diagrams of a method, a device (system), and a computer program product according to embodiments of the present invention. It should be understood that each flow and/or block in a flowchart and/or block diagram, and combinations of flows and/or blocks in the flowchart and/or block diagram may be implemented by computer program instructions. These computer program instructions may be provided to a processor of a general purpose computer, a special purpose computer, an embedded processor or other programmable data processing devices to produce a machine, so that the instructions executed by the processor of the computer or other programmable data processing devices produce means for implementing the functions specified in one or a plurality of flows in a flowchart and/or one or a plurality of blocks in a block diagram.

These computer program instructions may also be stored in a computer-readable memory that can direct a computer or other programmable data processing devices to operate in a specific manner, so that the instructions stored in the computer-readable memory can produce an article of manufacture, including instruction means for implementing the functions specified in one or a plurality of flows in a flowchart and/or one or a plurality of blocks in a block diagram.

These computer program instructions may also be loaded onto a computer or other programmable data processing devices, so that a series of operational steps are executed on the computer or other programmable devices to produce a computer-implemented process; therefore, the instructions executed on the computer or other programmable devices provide steps for implementing the functions specified in one or a plurality of flows in a flowchart and/or one or a plurality of blocks in a block diagram.

The above specific embodiments further illustrate the purpose, technical solution and advantageous effects of the present invention. It should be understood that the foregoing descriptions are only specific embodiments of the present invention, and are not intended to limit the scope of protection of the present invention. Any modification, equivalent substitutions and improvements made within the spirit and principle of the present invention shall fall within the scope of protection of the present invention.

## Claims

1. A device configuration-parsing system, comprising a configuration editor, a configuration compiler and a configuration parser;
wherein the configuration editor implements engineering configuration page design and parameter configuration to generate an xml description file of user configuration data;
the configuration compiler converts the xml description file of user configuration data to generate a configuration data file; and
the configuration parser is deployed on a physical machine or an analog machine or an upper computer of the device, and parses the configuration data file and periodically generates run data, comprising internal variable data, engineering page data and human-machine operation data, **characterized in that** the device is a nuclear-grade safety display device and wherein the configuration parser forms a configuration simulator together with an instruction control module, an I/O interface, a data management module, a network variable xml parsing module and an I/O buffer;
wherein the instruction control module allows for different working modes by controlling and scheduling the data management module, the configuration parser, the network variable xml parsing module and the I/O interface;
the I/O interface implements simulation of hardware functions possessed by the physical machine;
the data management module provides a partitioned storage and management of running process data periodically generated by the configuration parser, and the running process data can be reloaded to run in the configuration parser, thereby reproducing a historical running process;
the network variable xml parsing module graphically displays a network variable list and provides simulation monitoring and simulation intensity modulation; and
the I/O buffer temporarily stores process data to be loaded or periodically generated by the configuration parser.

2. The nuclear-grade safety display device configuration-parsing system according to claim 1, **characterized in that** the configuration parser is deployed on the physical machine to parse the configuration data, restore the engineering configuration page in coordination with a co-accelerator, and execute human-machine interaction, data communication and data storage according to the parameter configuration.

3. The nuclear-grade safety display device configuration-parsing system according to claim 1, **characterized in that**,
the configuration simulator is deployed on the analog machine to simulate the operation of the physical machine, restore the engineering configuration page and execute human-machine interaction according to the parameter configuration, and it is also able to record or save the running process data, analyze operation and maintenance data and replay an accident;
or the configuration simulator is deployed on the upper computer for verification of the engineering configuration page only.

4. The nuclear-grade safety display device configuration-parsing system according to claim 3, **characterized in that** when the configuration simulator works in the engineering configuration page verification mode:
the instruction control module sends out a working instruction of engineering configuration page verification;
the network variable xml parsing module graphically presents lists of receiving and sending network variables, wherein the list of receiving network variables provides a dynamic monitoring function and the list of sending network variables provides a simulation intensity modulation function; and
the I/O interface simulates a physical key, a resistive touch screen, network communication and data access.

5. The nuclear-grade safety display device configuration-parsing system according to claim 3, **characterized in that** when the configuration simulator works in an analog machine mode, a simulation run stage and a replay run stage are divided based on a chronological order;
in the simulation run stage:
the instruction control module sends out a working instruction of simulation run;
upon receiving the working instruction of simulation run, the configuration parser periodically parses and executes the configuration data, and periodically sends out the running process data to an output buffer for storage;
upon receiving the working instruction of simulation run, the I/O interface reads human-machine input and network variable input, sends the network variable and the human-machine input to the configuration parser and the data management module in parallel, and provides storage access simulation;
upon receiving the working instruction of simulation run, the data management module periodically and differentially stores data in the human-machine input and output buffer; in the replay run stage:
the instruction control module sends out a working instruction of replay run; and upon receiving the working instruction of replay run, the configuration parser reloads the running process data stored in the simulation run stage, so as to reproduce a historical process, data and operation of the simulation run stage.

6. The nuclear-grade safety display device configuration-parsing system according to any one of claims 1 to 5, **characterized in that** a header of the configuration data generated by the configuration compiler has a check code;
the configuration data consists of the header and a data block;
the header stores check information, length information, version number information, description information, basic information of functional data blocks and offset addresses of the functional data blocks in the configuration data; and
the data block stores engineering page information, switching logic information and variable association information.

7. The nuclear-grade safety display device configuration-parsing system according to claim 6, **characterized in that** the data block comprises a color block, a variable block, a task block, a page block, an alarm block and an image resource block;
wherein the color block is a data block composed of a plurality of horizontal color lines, and is used to characterize a mass bit abnormality of network variables associated with icons;
the variable block comprises a network variable block, a system variable block and a local variable block, and consists of a first index and a variable item;
the task block comprises a network packing block, a network unpacking block and a periodic execution block, and consists of a second index and a single function Fun; the page block consists of a page index and configuration information of a single engineering page;
the alarm block consists of a first resource index and an alarm configuration; and
the image resource block consists of a second resource index, index information of a single image resource and specific data of the image resource.

8. The nuclear-grade safety display device configuration-parsing system according to claim 7, **characterized in that** the variable item occupies 32 bytes in total: 2 bytes for a type field, 2 bytes for an index field, 2 bytes for a variable source field and 26 bytes for a variable data field.

9. The nuclear-grade safety display device configuration-parsing system according to claim 7, **characterized in that** the alarm configuration comprises a variable name image index, a first image index for alarm flashing, a second image index for alarm flashing, an alarm sign image index, an alarm description image index, an alarm level and an alarm source.

10. The nuclear-grade safety display device configuration-parsing system according to claim 7, **characterized in that** the index information of a single image resource comprises an offset address of the image resource and a number of bytes occupied thereby; and the specific data of the image resource comprises a width, a height and a specific pixel value.

11. The nuclear-grade safety display device configuration-parsing system according to claim 7, **characterized in that** the configuration information of the single engineering page consists of header data, human-machine response header data, a human-machine response function Fun sequence, a page preparation function Fun sequence and a page refresh function Fun sequence;
wherein the human-machine response header data consist of a header serial number and configuration data responding to a single human-machine event; and
the human-machine response Function Fun sequence, the page preparation Function Fun sequence and the page refresh Function fun sequence all consist of a function Fun serial number and a function Fun.

12. The nuclear-grade safety display device configuration-parsing system according to claim 11, **characterized in that** the configuration data responding to a single human-machine event consist of a human-machine input key code, a touch screen coordinate range, a reserved field and a function Fun index.

13. The nuclear-grade safety display device configuration-parsing system according to claim 11, **characterized in that** the function Fun consists of a number ID and parameters.

14. The nuclear-grade safety display device configuration-parsing system according to any one of claims 1 to 5, **characterized in that** the configuration editor provides a graphical interface for engineering page configuration, engineering page switching logic, variable association and icon library configuration management;
wherein the results of engineering page configuration, engineering page switching logic and variable association are stored in an xml file.

15. The nuclear-grade safety display device configuration-parsing system according to any one of claims 1 to 5, **characterized in that** the configuration editor comprises a main interface module, an engineering management module, a variable management module, an operation panel template management module, an image resource management module, an important parameter management module, a page management module, a control style management module and an information security module;
wherein the main interface module provides a window for global view and operation of the configuration editor;
the engineering management module provides engineering directory management, page organization, variable and icon resource entry management;
the variable management module provides a creation of variables as well as the configuration of initial values, effective values and alarm information;
the operation panel template management module provides a creation and configuration of standard or non-standard device operation panels;
the image resource management module provides an icon import and icon library management required by users;
the important parameter management module provides parameter configuration management of PLM group and alarm data;
the page management module provides creation, modification, deletion and configuration of engineering configuration pages;
the control style management module provides a style editing and management of different types of controls; and
the information security module encrypts and decrypts engineering files, configuration files and variable files of a configuration project on the premise of ensuring data authenticity and integrity.

16. The nuclear-grade safety display device configuration-parsing system according to any one of claims 1 to 5, **characterized in that** in course of running, the configuration editor simultaneously decrypts xml data while reading the xml data of engineering files, configuration files and variable files, and then encrypts and stores the xml data generated by the engineering configuration page.

17. The nuclear-grade safety display device configuration-parsing system according to any one of claims 1 to 5, **characterized in that** the configuration compiler converts an xml description file of user configuration data generated by the configuration editor into the configuration data file in the following specific steps:
opening an engineering configuration xml file;
loading the engineering configuration xml file with data, while executing the decryption operation of the xml file in the loading process;
checking a loaded data, and converting all kinds of the loaded data into data of a configuration data structure as configured for the nuclear-grade safety display device; and
writing a generated data of the configuration data structure into a specified binary file to obtain a configuration data configuration file.

18. A nuclear-grade safety display device, **characterized by** comprising an upper computer, a physical machine and an analog machine; wherein the upper computer is deployed with the configuration editor and the configuration compiler for the configuration-parsing system according to any one of claims 1 to 17;
the physical machine is deployed with the configuration parser for the configuration-parsing system according to any one of claims 1 to 17;
the analog machine is deployed with the configuration simulator for the configuration-parsing system according to any one of claims 1 to 5;
the upper computer implements engineering page configuration offline and downloads generated configuration data file to the physical machine and the analog machine via a maintenance communication network;
the physical machine acquires data of a security-level Distributed Control System, DCS, parses the configuration data by the configuration parser to restore an engineering configuration page, and executes human-machine interaction, data communication and data storage according to a parameter configuration; and
the analog machine establishes communication connection with the physical machine via an isolated communication network to acquire the data of the security-level Distributed Control System, DCS, and a self-diagnosis fault data of the physical machine, simulates a running process of the physical machine via the configuration simulator, and records or stores running process data, so as to implement the functions of collecting and analyzing operation and maintenance data and replaying an accident.

19. The nuclear-grade safety display device according to claim 18, **characterized in that** the physical machine is further deployed with:
a co-accelerator and a high density heterogeneous circuit;
the configuration parser of the physical machine parses the configuration data file, restores the engineering configuration page in coordination with the co-accelerator, and executes human-machine interaction, data communication and data storage according to the parameter configuration; and
the high-density heterogeneous circuit serves as a hardware entity that carries various services of the physical machine.

20. The nuclear-grade safety display device according to claim 18, **characterized in that** the physical machine and the analog machine are of an integrated seismic structure;
the integrated seismic structure comprises a rear panel (1), a pressing plate (11) arranged below the rear panel (1) and a front panel (8) arranged below the pressing plate (11); the rear panel (1) is fixedly connected with the front panel (8) to form a housing; a main processing circuit board (3) is arranged on the panel of the pressing plate (11); a screen assembly (9) is arranged between the pressing plate (11) and the front panel (8) in such a manner that the screen assembly (9) is set inside the front panel (8) and fixed with the front panel (8) by means of at least one second shock-absorbing pad (13) in Z direction and a third shock-absorbing pad (12) in X and Y directions and that the pressing plate (11) is pressed on the screen assembly (9) by a pressing device, so that the shock-absorbing pad and a conductive rubber can be elastically deformed; an internal outgoing line comes out from the rear end of the nuclear-grade safety display device by means of an interface module (16) which consists of an interface module mounting block (1601) and an interface module circuit board (1602) fixed to the interface module mounting block (1601) by screws and connected with the main processing circuit board (3) by connectors; the interface module (16) is fixed to the front panel (8) to limit the displacement of the interface module (16); and keyboards (7) on both sides are arranged inside the front panel (8).

21. The nuclear-grade safety display device according to claim 20, **characterized in that** the screen assembly (9) comprises a thermally conductive material (902), an LCD (904), a first conductive rubber (905), a shielding glass (906), a first shock-absorbing pad (907) and a touch screen (908) arranged sequentially from top to bottom; the front of the touch screen (908) is closely attached to the at least one second shock-absorbing pad (13) and the third shock-absorbing pad (12), and the first shock-absorbing pad (907) is attached to the back of the touch screen (908); a nonconductive surface of the shielding glass (906) is attached to the first shock-absorbing pad (907), and the first conductive rubber (905) is attached to a conductive surface of the shielding glass (906); a silk screen of the shielding glass (906) is pressed inside the front panel (8) by using a pressing frame (903), a visible surface of the LCD (904) is closely attached to the first conductive rubber (905), the thermally conductive material is arranged on the back of the LCD (904), and the front panel (8), the rear panel (1) and the shielding glass (906) forms a complete shielding cavity.

22. The nuclear-grade safety display device according to claim 20, **characterized in that** the front panel (8) is of a frame-shaped structure, a first fixed cavity (801) is provided inside the front panel (8), a second fixed cavity (802) is provided on the side of the front panel (8), and the second fixed cavity (802) is located next to the first fixed cavity (801).

23. The nuclear-grade safety display device according to claim 22, **characterized in that** the screen assembly (9) is arranged inside the first fixed cavity (801) and is in contact with the first fixed cavity (801) by means of the at least one second shock-absorbing pad (13) and the third shock-absorbing pad (12).

24. The nuclear-grade safety display device according to claim 22, **characterized in that** the second fixed cavity (802) is provided with the keyboards (7), and a gap between the second fixed cavity (802) and the keyboards (7) is filled with a third conductive rubber (15).

25. The nuclear-grade safety display device according to claim 20, **characterized in that** an air outlet (807) is provided on the top of the front panel (8), and the surface of the air outlet (807) is provided with a first shielding screen (5) for electromagnetic shielding.

26. The nuclear-grade safety display device according to claim 20, **characterized in that** the rear panel (1) comprises a rear cover plate (101), a power module (103), a filter module (102) and a power interface, wherein the power module (103), the filter module (102) and the power interface are all arranged on the rear cover plate (101).

27. The nuclear-grade safety display device according to claim 26, **characterized in that** an air inlet (14) is provided on the rear cover plate (101) of the rear panel (1) and the surface of the air inlet (14) is provided with a second shielding screen (10) for electromagnetic shielding.

28. The nuclear-grade safety display device according to claim 20, **characterized in that** the gap between the front panel (8) and the rear panel (1) is filled with a second conductive rubber (2).

29. The nuclear-grade safety display device according to claim 20, **characterized in that** the interface module (16) is connected with the main processing circuit board (3) by means of a connector (1603) and is fixed to an inner wall (808) of the front panel (8), and a connection port on the interface module (16) extends out of the display device through the rear panel (1).

30. The nuclear-grade safety display device according to claim 20, **characterized in that** a keyboard circuit board (701), a keycap (702) and a key silicone pad (703) are further arranged between the keyboards (7) and the front panel (8).

31. The nuclear-grade safety display device according to claim 19, **characterized in that** the high-density heterogeneous circuit consists of a heterogeneous controller group, a storage array module, a communication module, a power module (103) and a human-machine input/output module;
wherein the heterogeneous controller group consists of Field Programmable Gate Array, FPGA, that carries the co-accelerator service and Microprocessor (MPU) that carries the configuration parser service;
the Field Programmable Gate Array, FPGA, the Microprocessor, MPU, and the storage array module are interconnected by parallel buses, and the human-machine input/output module and the communication module are all connected on the Field Programmable Gate Array, FPGA, and
the power module (103) supplies power to other modules in the high-density heterogeneous circuit

32. The nuclear-grade safety display device according to claim 19, **characterized in that** the co-accelerator consists of a bus address management unit, a graphics co-acceleration unit, a human-machine input co-processing unit, a storage co-processing unit and a communication co-processing unit; and
the co-accelerator is interconnected with the configuration parser in the physical machine by a parallel bus to implement the co-accelerated processing of graphics, communication, human-machine input and storage.

33. The nuclear-grade safety display device according to claim 32, **characterized in that** objects of the graphics co-acceleration unit comprise 2D icon copying, trend curve continuity, dot matrix character drawing and dual cache control, which can generate image data required by the configuration parser and drive LCD to display the data by means of co-acceleration; and the graphics co-acceleration unit comprises a control module, a multi-layer cache, multi-layer hardware Fun, a layer fuser and a dual cache controller.

34. The nuclear-grade safety display device according to claim 33, **characterized in that** the control module triggers the multi-layer hardware Fun, the layer fuser and the dual cache controller to cooperatively generate the image data and update LCD display data according to the input control instructions and parameters.

35. The nuclear-grade safety display device according to claim 33, **characterized in that** the multi-layer cache is a buffer storage matching the multi-layer hardware Fun, and temporarily stores icon data;
the multi-layer hardware Fun integrates three independent layer control units, namely a dot matrix character drawing unit, a trend curve continuity unit and a 2D icon copying unit.
each layer control unit monopolizes a continuous address space in the multi-layer cache as own image data temporary cache; and
the multi-layer hardware Fun allows three instructions from the control module to be executed in parallel.

36. The nuclear-grade safety display device according to claim 33, **characterized in that**, according to an instruction of the control module, the layer fuser integrates the image data of different areas in the multi-layer cache into a complete image data, and sends the same to the dual cache controller; and
according to the instruction of the control module, the layer fuser can also send some image data in the multi-layer cache to the dual cache controller to update local data.

37. The nuclear-grade safety display device according to claim 33, **characterized in that** the dual cache controller provides a drive control for two independent physical storage devices which alternately implement functions of engineering page data caching and display data caching in a time-sharing manner.

38. The nuclear-grade safety display device according to claim 32, **characterized in that** the human-machine input co-processing unit provides a variety of human-machine input detection means, i.e., a physical keys-based filtering and latching mechanism and a resistive touch screen-based coordinate data acquisition and caching mechanism.

39. The nuclear-grade safety display device according to claim 32, **characterized in that** the storage co-processing unit consists of an instruction control module, a 4KB buffered dual-port, RAM1, a data copy and compression module, a storage timing driver module and a 4KB buffered dual-port, RAM2, wherein the instruction control module decodes a co-processing instruction or a parameter from the configuration parser, outputs and feeds a current co-processing execution state back to the configuration parser, further schedules the data copy and compression module and the storage timing driver module according to the decoded instructions and parameters, and receives a state feedback;
the data copy and compression module implements data copy operation between the 4KB buffered dual-port, RAM1, and the 4KB buffered dual-port, RAM2, compresses logical data into physical data when copying downlink data, and compresses physical data into logical data when copying uplink data;
the storage timing driver module provides physical storage access timing, copies data from the 4KB buffered dual-port, RAM2, and writes the same into the storage when executing the downlink data operation, and writes the data from the storage into the 4KB buffered dual-port, RAM2, when executing the uplink data operation;
the 4KB buffered dual-port, RAM1, provides a data channel between the configuration parser and the storage co-processing unit, which get access to the 4KB buffered dual-port, RAM1, in a time-sharing manner; and
the 4KB buffered dual-port, RAM2, provides a data channel between the data copy and compression module and the storage timing driver module, which get access to the 4KB buffered dual-port, RAM2, in a time-sharing manner.

40. The nuclear-grade safety display device according to claim 32, **characterized in that** the communication co-processing unit comprises: cold standby link management for maintenance communication functions between the physical machine and the upper computer, and between the analog machine and the upper computer, that is, one of an optical fiber link 1 and an optical fiber link 2 is selected for maintenance communication by means of parameter setting; isolated communication link management, that is, isolated communication between the physical machine and the analog machine is implemented by means of a RS485 link; hot standby communication link management, that is, the hot standby communication between the physical machines is implemented by means of two optical fiber links; and secure communication link management, that is, secure communication between the physical machine and the security-level Distributed Control System, DCS, is implemented by means of two hot standby redundant optical fiber links.

41. The nuclear-grade safety display device according to claim 18, **characterized in that** the analog machine is further deployed with a micro X86 motherboard;
the configuration simulator runs on the micro X86 motherboard, and has the ability to record the process data of simulation run for a long time and to replay the historical process that has run.

42. The nuclear-grade safety display device according to claim 18, **characterized in that** a hot standby function of the physical machine is implemented by two physical machines through hot standby communication and hot standby switching, and comprises the following procedures:
in power-on startup process, an initial permission of a master device and a backup device is determined by a first start-up judgment and a mutual fault judgment of the physical machines;
in the running process, the master device and the backup device periodically exchange diagnostic data and network variable data from the security-level Distributed Control System, DCS;
a slave device disables own human-machine input data; and an engineering page display and human-machine response behavior of the master device are synchronously reproduced on the backup device; and
in switching process, data exchange behavior between the master device and the backup device, and between the master and backup devices and the security-level Distributed Control System, DCS, will not be affected; and the master device and the backup device are switched completely after the processes of: fault detection and permission switching validation of the master device, validation of conditions for upgrading the backup device to the mater device, updating of data identification of the master device and the backup device, enabling of own human-machine input by the backup device and disabling of own human-machine input by the master device.

43. The nuclear-grade safety display device according to claim 18, **characterized in that** the device is implemented by using one analog machine in coordination with one physical machine or two hot standby physical machines, for the purpose of implementing digital twinning of the physical machines in operation and maintenance stages, which includes synchronous reproduction of human-machine interaction behavior, long-term process data recording and post-accident condition analysis, and monitoring and analysis of self-diagnosis fault data of physical machines.

44. The nuclear-grade safety display device according to claim 43, **characterized in that** the human-machine input data of the physical machine and the network variable data of the security-level Distributed Control System, DCS, are forwarded to the analog machine; and the analog machine synchronously reproduces the human-machine interaction behavior on the analog machine in real time by disabling own human-machine input and using data from the physical machine.

45. The nuclear-grade safety display device according to claim 43, **characterized in that** the self-diagnosis fault data of the physical machine is periodically sent to the analog machine for modeling analysis to realize preventive maintenance and early warning forecast, and the modeling analysis comprises:
clock-dependent instability analysis;
a clock instability is evaluated and a preventive maintenance alarm is given by using cycle time values from the physical machine and time values of data blocks within a cycle, as well as the empirical values obtained in the test and production process by the methods of trend statistics and accumulation;
analysis of power supply instability;
an instability of power supply is evaluated and preventive maintenance alarm is given by using periodic power data acquired from the physical machine and an empirical data obtained during testing and production by the methods of trend statistics, variance calculation, peak-to-peak calculation, effective value calculation and abnormal peak statistics;
instability analysis of human-machine input device;
a degree of aging of a resistive touch screen or degree of instability of a coordinate data collection, and contact goodness of physical keys are evaluated, and the preventive maintenance alarm is given by using a coordinate data of the resistive touch screen from the physical machine and delay filter parameters of the physical keys, as well as empirical values obtained from the production and testing processes by the methods of trend statistics and variance calculation;
instability analysis of storage device;
a write endurance status of Flash device is evaluated and the preventive maintenance alarm is given by using write access times and erase times of Flash device from the physical machine and supplier's standard write access times of Flash device.

## Patentansprüche

1. Vorrichtungskonfigurationsparsingsystem, umfassend einen Konfigurationseditor, einen Konfigurationscompiler und einen Konfigurationsparser;
wobei der Konfigurationseditor ein Engineeringkonfigurationsseitendesign und eine Parameterkonfiguration implementiert, um eine XML-Beschreibungsdatei von Benutzerkonfigurationsdaten zu erzeugen;
der Konfigurationscompiler die XML-Beschreibungsdatei der Benutzerkonfigurationsdaten umwandelt, um eine Konfigurationsdatendatei zu erzeugen; und
der Konfigurationsparser auf einer physischen Maschine oder einer analogen Maschine oder einem übergeordneten Computer der Vorrichtung eingesetzt wird und die Konfigurationsdatendatei analysiert und periodisch Laufdaten erzeugt, die interne Variablendaten, Engineeringseitendaten und Mensch-Maschine-Betriebsdaten umfassen, **dadurch gekennzeichnet, dass** die Vorrichtung eine Nuklearqualität-Sicherheitsanzeigevorrichtung ist, und wobei der Konfigurationsparser zusammen mit einem Befehlssteuermodul, einer E/A-Schnittstelle, einem Datenverwaltungsmodul, einem Netzwerkvariablen-XML-Parsingmodul und einem E/A-Puffer einen Konfigurationssimulator bildet;
wobei das Befehlssteuermodul durch Steuern und Einplanen des Datenverwaltungsmoduls, des Konfigurationsparsers, des Netzwerkvariablen-XML-Parsingmoduls und der E/A-Schnittstelle verschiedene Arbeitsmodi ermöglicht;
die E/A-Schnittstelle die Simulation von der physischen Maschine besessenen Hardwarefunktionen implementiert;
das Datenverwaltungsmodul eine partitionierte Speicherung und Verwaltung von laufenden Prozessdaten bereitstellt, die von dem Konfigurationsparser periodisch erzeugt werden, und die laufenden Prozessdaten neu geladen werden können, sodass sie im Konfigurationsparser laufen und dadurch ein historischer laufender Prozess reproduziert wird;
das Netzwerkvariablen-XML-Parsingmodul eine Netzwerkvariablenliste grafisch darstellt und Simulationsüberwachung und Simulationsintensitätsmodulation bereitstellt; und
der E/A-Puffer Prozessdaten temporär speichert, die von dem Konfigurationsparser zu laden oder periodisch zu erzeugen sind.

2. Nuklearqualität-Sicherheitsanzeigevorrichtungs-Konfigurationsparsingsystem nach Anspruch 1, **dadurch gekennzeichnet, dass** der Konfigurationsparser auf der physischen Maschine eingesetzt wird, um die Konfigurationsdaten zu analysieren, die Engineeringkonfigurationsseite in Koordination mit einem Co-Beschleuniger wiederherzustellen und die Mensch-Maschine-Interaktion, die Datenkommunikation und die Datenspeicherung gemäß der Parameterkonfiguration auszuführen.

3. Nuklearqualität-Sicherheitsanzeigevorrichtungs-Konfigurationsparsingsystem nach Anspruch 1, **dadurch gekennzeichnet, dass**,
der Konfigurationssimulator auf der analogen Maschine eingesetzt wird, um den Betrieb der physischen Maschine zu simulieren, die Engineeringkonfigurationsseite wiederherzustellen und die Mensch-Maschine-Interaktion gemäß der Parameterkonfiguration auszuführen, und dieser auch in der Lage ist, die laufenden Prozessdaten aufzuzeichnen oder zu speichern, Betriebs- und Wartungsdaten zu analysieren und einen Unfall zu wiederholen;
oder der Konfigurationssimulator auf dem übergeordneten Computer nur zur Überprüfung der Engineeringkonfigurationsseite eingesetzt wird.

4. Nuklearqualität-Sicherheitsanzeigevorrichtungs-Konfigurationsparsingsystem nach Anspruch 3, **dadurch gekennzeichnet, dass**, wenn der Konfigurationssimulator im Engineeringkonfigurationsseitenüberprüfungsmodus arbeitet:
das Befehlssteuermodul einen Engineeringkonfigurationsseitenüberprüfungsarbeitsbefehl aussendet;
das Netzwerkvariablen-XML-Parsingmodul Listen von Empfangs- und Sendenetzwerkvariablen grafisch darstellt, wobei die Liste der Empfangsnetzwerkvariablen eine dynamische Überwachungsfunktion bereitstellt und die Liste der Sendenetzwerkvariablen eine Simulationsintensitätsmodulationsfunktion bereitstellt; und
die E/A-Schnittstelle eine physische Taste, einen resistiven Touchscreen, Netzwerkkommunikation und Datenzugriff simuliert.

5. Nuklearqualität-Sicherheitsanzeigevorrichtungs-Konfigurationsparsingsystem nach Anspruch 3, **dadurch gekennzeichnet, dass**, wenn der Konfigurationssimulator in einem analogen Maschinenmodus arbeitet, eine Simulationslaufphase und eine Wiederholungslaufphase basierend auf einer chronologischen Reihenfolge unterteilt sind;
in der Simulationslaufphase:
das Befehlssteuermodul einen Simulationslaufarbeitsbefehl aussendet;
beim Empfangen des Simulationslaufarbeitsbefehls der Konfigurationsparser die Konfigurationsdaten periodisch analysiert und ausführt und die laufenden Prozessdaten periodisch an einen Ausgabepuffer zur Speicherung aussendet;
beim Empfangen des Simulationslaufarbeitsbefehls die E/A-Schnittstelle die Mensch-Maschine-Eingaben und Netzwerkvariableneingaben liest, die Netzwerkvariablen und die Mensch-Maschine-Eingaben parallel an den Konfigurationsparser und das Datenverwaltungsmodul sendet und eine Speicherzugriffssimulation bereitstellt;
beim Empfangen des Simulationslaufarbeitsbefehls das Datenverwaltungsmodul periodisch und differenziert Daten in dem Mensch-Maschine-Ein- und Ausgabepuffer speichert;
in der Wiederholungslaufphase:
das Befehlssteuermodul einen Wiederholungslaufarbeitsbefehl aussendet; und
beim Empfangen des Wiederholungslaufarbeitsbefehls der Konfigurationsparser die in der Simulationslaufphase gespeicherten laufenden Prozessdaten neu lädt, um einen historischen Prozess und Daten und Betrieb der Simulationslaufphase zu reproduzieren.

6. Nuklearqualität-Sicherheitsanzeigevorrichtungs-Konfigurationsparsingsystem nach einem der Ansprüche 1 bis 5, **dadurch gekennzeichnet, dass** ein Header der von dem Konfigurationscompiler erzeugten Konfigurationsdaten einen Prüfcode aufweist;
die Konfigurationsdaten aus dem Header und einem Datenblock bestehen;
der Header Prüfinformationen, Längeninformationen, Versionsnummerninformationen, Beschreibungsinformationen, Basisinformationen von Funktionsdatenblöcken und Offsetadressen der Funktionsdatenblöcke in den Konfigurationsdaten speichert; und
der Datenblock Engineeringseiteninformationen, Schaltlogikinformationen und Variablenzuordnungsinformationen speichert.

7. Nuklearqualität-Sicherheitsanzeigevorrichtungs-Konfigurationsparsingsystem nach Anspruch 6, **dadurch gekennzeichnet, dass** der Datenblock einen Farbblock, einen Variablenblock, einen Aufgabenblock, einen Seitenblock, einen Alarmblock und einen Bildressourcenblock umfasst;
wobei der Farbblock ein Datenblock ist, der aus mehreren horizontalen Farblinien besteht und zum Charakterisieren einer Massenbitabweichung von mit Symbolen in Zusammenhang stehenden Netzwerkvariablen verwendet wird;
der Variablenblock einen Netzwerkvariablenblock, einen Systemvariablenblock und einen lokalen Variablenblock umfasst und aus einem ersten Index und einem variablen Element besteht;
der Aufgabenblock einen Netzwerk-Packen-Block, einen Netzwerk-Entpacken-Block und einen periodischen Ausführungsblock umfasst und aus einem zweiten Index und einer einzelnen Funktion Fun besteht; der Seitenblock aus einem Seitenindex und Konfigurationsinformationen einer einzelnen Engineeringseite besteht;
der Alarmblock aus einem ersten Ressourcenindex und einer Alarmkonfiguration besteht; und
der Bildressourcenblock aus einem zweiten Ressourcenindex, Indexinformationen einer einzelnen Bildressource und spezifischen Daten der Bildressource besteht.

8. Nuklearqualität-Sicherheitsanzeigevorrichtungs-Konfigurationsparsingsystem nach Anspruch 7, **dadurch gekennzeichnet, dass** das variable Element insgesamt 32 Bytes belegt: 2 Bytes für ein Typfeld, 2 Bytes für ein Indexfeld, 2 Bytes für ein Variablenquellenfeld und 26 Bytes für ein Variablendatenfeld.

9. Nuklearqualität-Sicherheitsanzeigevorrichtungs-Konfigurationsparsingsystem nach Anspruch 7, **dadurch gekennzeichnet, dass** die Alarmkonfiguration einen Variablennamenbildindex, einen ersten Bildindex für Alarmblinken, einen zweiten Bildindex für Alarmblinken, einen Alarmzeichenbildindex, einen Alarmbeschreibungsbildindex, eine Alarmstufe und eine Alarmquelle umfasst.

10. Nuklearqualität-Sicherheitsanzeigevorrichtungs-Konfigurationsparsingsystem nach Anspruch 7, **dadurch gekennzeichnet, dass** die Indexinformationen einer einzelnen Bildressource eine Offsetadresse der Bildressource und eine Anzahl an dadurch belegten Bytes umfassen; und die spezifischen Daten der Bildressource eine Breite, eine Höhe und einen spezifischen Pixelwert umfassen.

11. Nuklearqualität-Sicherheitsanzeigevorrichtungs-Konfigurationsparsingsystem nach Anspruch 7, **dadurch gekennzeichnet, dass** die Konfigurationsinformationen der einzelnen Engineeringseite aus Headerdaten, Mensch-Maschine-Antwort-Headerdaten, einer Mensch-Maschine-Antwortfunktion-Fun-Sequenz, einer Seitenaufbereitungsfunktion-Fun-Sequenz und einer Seitenauffrischungsfunktion-Fun-Sequenz bestehen;
wobei die Mensch-Maschine-Antwort-Headerdaten aus einer Headerseriennummer und auf ein einzelnes Mensch-Maschine-Ereignis reagierenden Konfigurationsdaten bestehen; und
die Mensch-Maschine-Antwort-Funktion-Fun-Sequenz, die Seitenaufbereitungsfunktion-Fun-Sequenz und die Seitenauffrischungsfunktion-Fun-Sequenz alle aus einer Funktion-Fun-Seriennummer und einer Funktion Fun bestehen.

12. Nuklearqualität-Sicherheitsanzeigevorrichtungs-Konfigurationsparsingsystem nach Anspruch 11, **dadurch gekennzeichnet, dass** die auf ein einzelnes Mensch-Maschine-Ereignis reagierenden Konfigurationsdaten aus einem Mensch-Maschine-Eingabe-Tastencode, einem Touchscreenkoordinatenbereich, einem reservierten Feld und einem Funktion-Fun-Index bestehen.

13. Nuklearqualität-Sicherheitsanzeigevorrichtungs-Konfigurationsparsingsystem nach Anspruch 11, **dadurch gekennzeichnet, dass** die Funktion Fun aus einer Nummern-ID und Parametern besteht.

14. Nuklearqualität-Sicherheitsanzeigevorrichtungs-Konfigurationsparsingsystem nach einem der Ansprüche 1 bis 5, **dadurch gekennzeichnet, dass** der Konfigurationseditor eine grafische Schnittstelle für die Engineeringseitenkonfiguration, Engineeringseitenschaltlogik, Variablenzuordnungs- und Symbolbibliothekkonfigurationsverwaltung bereitstellt;
wobei die Ergebnisse der Engineeringseitenkonfiguration, der Engineeringseitenschaltlogik und der Variablenzuordnung in einer XML-Datei gespeichert werden.

15. Nuklearqualität-Sicherheitsanzeigevorrichtungs-Konfigurationsparsingsystem nach einem der Ansprüche 1 bis 5, **dadurch gekennzeichnet, dass** der Konfigurationseditor ein Hauptschnittstellenmodul, ein Engineeringverwaltungsmodul, ein Variablenverwaltungsmodul, ein Bedienfeldvorlagenverwaltungsmodul, ein Bildressourcenverwaltungsmodul, ein Wichtige-Parameter-Verwaltungsmodul, ein Seitenverwaltungsmodul, ein Steuerelementstilverwaltungsmodul und ein Informationssicherheitsmodul umfasst;
wobei das Hauptschnittstellenmodul ein Fenster für globale Ansicht und Bedienung des Konfigurationseditors bereitstellt;
das Engineeringverwaltungsmodul eine Engineeringverzeichnisverwaltung, Seitenorganisation und Variablen- und Symbolressourceneintragsverwaltung bereitstellt;
das Variablenverwaltungsmodul eine Erstellung von Variablen sowie die Konfiguration von Anfangswerten, effektiven Werten und Alarminformationen bereitstellt;
das Bedienfeldvorlagenverwaltungsmodul eine Erstellung und Konfiguration von Standard- oder Nicht-Standardvorrichtungsbedienfeldern bereitstellt;
das Bildressourcenverwaltungsmodul einen Symbolimport und eine von Benutzern erforderliche Symbolbibliotheksverwaltung bereitstellt;
das Wichtige-Parameter-Verwaltungsmodul eine Parameterkonfigurationsverwaltung von PLM-Gruppen und Alarmdaten bereitstellt;
das Seitenverwaltungsmodul die Erstellung, Modifikation, Löschung und Konfiguration von Engineeringkonfigurationsseiten bereitstellt;
das Steuerelementstilverwaltungsmodul eine Stilbearbeitung und -verwaltung verschiedener Arten von Steuerelementen bereitstellt; und
das Informationssicherheitsmodul Engineeringdateien, Konfigurationsdateien und Variablendateien eines Konfigurationsprojekts unter der Prämisse, die Authentizität und Integrität der Daten sicherzustellen, verschlüsselt und entschlüsselt.

16. Nuklearqualität-Sicherheitsanzeigevorrichtungs-Konfigurationsparsingsystem nach einem der Ansprüche 1 bis 5, **dadurch gekennzeichnet, dass** der Konfigurationseditor während des Laufens gleichzeitig XML-Daten entschlüsselt, während er die XML-Daten von Engineeringdateien, Konfigurationsdateien und Variablendateien liest, und dann die von der Engineeringkonfigurationsseite erzeugten XML-Daten verschlüsselt und speichert.

17. Nuklearqualität-Sicherheitsanzeigevorrichtungs-Konfigurationsparsingsystem nach einem der Ansprüche 1 bis 5, **dadurch gekennzeichnet, dass** der Konfigurationscompiler eine von dem Konfigurationseditor erzeugte XML-Beschreibungsdatei von Benutzerkonfigurationsdaten in die Konfigurationsdatendatei in den folgenden spezifischen Schritten umwandelt:
Öffnen einer Engineeringkonfigurations-XML-Datei;
Laden der Engineeringkonfigurations-XML-Datei mit Daten, während des Ausführens der Entschlüsselungsoperation der XML-Datei im Ladeprozess;
Prüfen der geladenen Daten und Umwandeln aller Arten der geladenen Daten in Daten einer Konfigurationsdatenstruktur, wie sie für die Nuklearqualität-Sicherheitsanzeigevorrichtung konfiguriert ist; und
Schreiben von erzeugten Daten der Konfigurationsdatenstruktur in eine spezifizierte Binärdatei, um eine Konfigurationsdatenkonfigurationsdatei zu erhalten.

18. Nuklearqualität-Sicherheitsanzeigevorrichtung, **dadurch gekennzeichnet, dass** sie einen übergeordneten Computer, eine physische Maschine und eine analoge Maschine umfasst; wobei der übergeordnete Computer mit dem Konfigurationseditor und dem Konfigurationscompiler für das Konfigurationsparsingsystem nach einem der Ansprüche 1 bis 17 eingesetzt wird;
die physische Maschine mit dem Konfigurationsparser für das Konfigurationsparsingsystem nach einem der Ansprüche 1 bis 17 eingesetzt wird;
die analoge Maschine mit dem Konfigurationssimulator für das Konfigurationsparsingsystem nach einem der Ansprüche 1 bis 5 eingesetzt wird;
der übergeordnete Computer die Engineeringseitenkonfiguration offline implementiert und die erzeugte Konfigurationsdatendatei über ein Wartungskommunikationsnetzwerk auf die physische Maschine und die analoge Maschine herunterlädt;
die physische Maschine Daten eines Sicherheitsebenen-Distributed Control System (Sicherheitsebenen-DCS) erlangt, die Konfigurationsdaten durch den Konfigurationsparser analysiert, um eine Engineeringkonfigurationsseite wiederherzustellen, und Mensch-Maschine-Interaktion, Datenkommunikation und Datenspeicherung gemäß einer Parameterkonfiguration ausführt; und
die analoge Maschine eine Kommunikationsverbindung mit der physischen Maschine über ein isoliertes Kommunikationsnetzwerk herstellt, um die Daten des Sicherheitsebenen-DCS und Selbstdiagnosefehlerdaten der physischen Maschine zu erlangen, einen laufenden Prozess der physischen Maschine über den Konfigurationssimulator simuliert und laufende Prozessdaten aufzeichnet oder speichert, um die Funktionen des Sammelns und Analysierens von Betriebs- und Wartungsdaten und des Wiederholens eines Unfalls zu implementieren.

19. Nuklearqualität-Sicherheitsanzeigevorrichtung nach Anspruch 18, **dadurch gekennzeichnet, dass** die physische Maschine ferner mit einem Co-Beschleuniger und einer heterogenen Schaltung hoher Dichte eingesetzt wird;
der Konfigurationsparser der physischen Maschine die Konfigurationsdatendatei analysiert, die Engineeringkonfigurationsseite in Koordination mit dem Co-Beschleuniger wiederherstellt und Mensch-Maschine-Interaktion, Datenkommunikation und Datenspeicherung gemäß der Parameterkonfiguration ausführt; und
die heterogene Schaltung hoher Dichte als Hardwareeinheit dient, die verschiedene Dienste der physischen Maschine übernimmt.

20. Nuklearqualität-Sicherheitsanzeigevorrichtung nach Anspruch 18, **dadurch gekennzeichnet, dass** die physische Maschine und die analoge Maschine aus einer integrierten seismischen Struktur bestehen;
die integrierte seismische Struktur eine Rückplatte (1), eine unterhalb der Rückplatte (1) angeordnete Druckplatte (11) und eine unterhalb der Druckplatte (11) angeordnete Frontplatte (8) umfasst; die Rückplatte (1) mit der Frontplatte (8) fest verbunden ist, um ein Gehäuse zu bilden; eine Hauptverarbeitungsplatine (3) auf der Platte der Druckplatte (11) angeordnet ist; eine Bildschirmanordnung (9) zwischen der Druckplatte (11) und der Frontplatte (8) derart angeordnet ist, dass die Bildschirmanordnung (9) innerhalb der Frontplatte (8) angeordnet und mit der Frontplatte (8) mittels mindestens eines Stücks eines zweiten stoßdämpfenden Polsters (13) in Z-Richtung und eines dritten stoßdämpfenden Polsters (12) in X- und Y-Richtung befestigt ist, und dass die Druckplatte (11) durch eine Druckvorrichtung auf die Bildschirmanordnung (9) gedrückt wird, sodass das stoßdämpfende Polster und ein leitender Gummi elastisch verformt werden können; eine interne abgehende Leitung aus dem hinteren Ende der Nuklearqualität-Sicherheitsanzeigevorrichtung mittels eines Schnittstellenmoduls (16) herauskommt, das aus einem Schnittstellenmodulbefestigungsblock (1601) und einer Schnittstellenmodulplatine (1602) besteht, die durch Schrauben an dem Schnittstellenmodulbefestigungsblock (1601) befestigt und mit der Hauptverarbeitungsplatine (3) durch Verbinder verbunden ist; das Schnittstellenmodul (16) an der Frontplatte (8) befestigt ist, um die Verschiebung des Schnittstellenmoduls (16) zu begrenzen; und Tastaturen (7) auf beiden Seiten innerhalb der Frontplatte (8) angeordnet sind.

21. Nuklearqualität Sicherheitsanzeigevorrichtung nach Anspruch 20, **dadurch gekennzeichnet, dass** die Bildschirmanordnung (9) ein wärmeleitendes Material (902), ein LCD (904), einen ersten leitenden Gummi (905), ein Abschirmglas (906), ein erstes stoßdämpfendes Polster (907) und einen Touchscreen (908) umfasst, die sequenziell von oben nach unten angeordnet sind; die Vorderseite des Touchscreens (908) eng an dem mindestens einen zweiten stoßdämpfenden Polster (13) und dem dritten stoßdämpfenden Polster (12) angebracht ist und das erste stoßdämpfende Polster (907) an der Rückseite des Touchscreens (908) angebracht ist; eine nicht-leitende Fläche des Abschirmglases (906) an dem ersten stoßdämpfenden Polster (907) angebracht ist und der erste leitende Gummi (905) an einer leitenden Fläche des Abschirmglases (906) angebracht ist; ein Siebdruck des Abschirmglases (906) unter Verwendung eines Druckrahmens (903) in das Innere der Frontplatte (8) gedrückt ist, eine sichtbare Fläche des LCD (904) eng an dem ersten leitenden Gummi (905) angebracht ist, das wärmeleitende Material auf der Rückseite des LCD (904) angeordnet ist und die Frontplatte (8), die Rückplatte (1) und das Abschirmglas (906) einen vollständigen Abschirmhohlraum bilden.

22. Nuklearqualität-Sicherheitsanzeigevorrichtung nach Anspruch 20, **dadurch gekennzeichnet, dass** die Frontplatte (8) aus einer rahmenförmigen Struktur besteht, ein erster fester Hohlraum (801) innerhalb der Frontplatte (8) vorgesehen ist, ein zweiter fester Hohlraum (802) an der Seite der Frontplatte (8) vorgesehen ist und der zweite feste Hohlraum (802) neben dem ersten festen Hohlraum (801) angeordnet ist.

23. Nuklearqualität-Sicherheitsanzeigevorrichtung nach Anspruch 22, **dadurch gekennzeichnet, dass** die Bildschirmanordnung (9) im Inneren des ersten festen Hohlraums (801) angeordnet ist und mit dem ersten festen Hohlraum (801) über das mindestens eine zweite stoßdämpfende Polster (13) und das dritte stoßdämpfende Polster (12) in Kontakt steht.

24. Nuklearqualität-Sicherheitsanzeigevorrichtung nach Anspruch 22, **dadurch gekennzeichnet, dass** der zweite feste Hohlraum (802) mit den Tastaturen (7) versehen ist und ein Zwischenraum zwischen dem zweiten festen Hohlraum (802) und den Tastaturen (7) mit einem dritten leitenden Gummi (15) gefüllt ist.

25. Nuklearqualität-Sicherheitsanzeigevorrichtung nach Anspruch 20, **dadurch gekennzeichnet, dass** ein Luftauslass (807) an der Oberseite der Frontplatte (8) vorgesehen ist und die Fläche des Luftauslasses (807) mit einer ersten Abschirmungsblende (5) zur elektromagnetischen Abschirmung versehen ist.

26. Nuklearqualität-Sicherheitsanzeigevorrichtung nach Anspruch 20, **dadurch gekennzeichnet, dass** die Rückplatte (1) eine hintere Abdeckplatte (101), ein Leistungsmodul (103), ein Filtermodul (102) und eine Leistungsschnittstelle umfasst, wobei das Leistungsmodul (103), das Filtermodul (102) und die Leistungsschnittstelle alle an der hinteren Abdeckplatte (101) angeordnet sind.

27. Nuklearqualität-Sicherheitsanzeigevorrichtung nach Anspruch 26, **dadurch gekennzeichnet, dass** ein Lufteinlass (14) auf der hinteren Abdeckplatte (101) der Rückplatte (1) vorgesehen ist und die Fläche des Lufteinlasses (14) mit einer zweiten Abschirmungsblende (10) zur elektromagnetischen Abschirmung versehen ist.

28. Nuklearqualität-Sicherheitsanzeigevorrichtung nach Anspruch 20, **dadurch gekennzeichnet, dass** der Zwischenraum zwischen der Frontplatte (8) und der Rückplatte (1) mit einem zweiten leitenden Gummi (2) gefüllt ist.

29. Nuklearqualität-Sicherheitsanzeigevorrichtung nach Anspruch 20, **dadurch gekennzeichnet, dass** das Schnittstellenmodul (16) mittels eines Verbinders (1603) mit der Hauptverarbeitungsplatine (3) verbunden und an einer Innenwand (808) der Frontplatte (8) befestigt ist, und dass sich ein Verbindungsanschluss an dem Schnittstellenmodul (16) durch die Rückplatte (1) aus der Anzeigevorrichtung heraus erstreckt.

30. Nuklearqualität-Sicherheitsanzeigevorrichtung nach Anspruch 20, **dadurch gekennzeichnet, dass** zwischen den Tastaturen (7) und der Frontplatte (8) ferner eine Tastaturplatine (701), eine Tastenkappe (702) und ein Tastensilikonpolster (703) angeordnet sind.

31. Nuklearqualität-Sicherheitsanzeigevorrichtung nach Anspruch 19, **dadurch gekennzeichnet, dass** die hochdichte heterogene Schaltung aus einer heterogenen Steuerungsgruppe, einem Speicherarraymodul, einem Kommunikationsmodul, einem Leistungsmodul (103) und einem Mensch-Maschine-Ein-/Ausgabemodul besteht;
wobei die heterogene Steuerungsgruppe aus einem feldprogrammierbaren Gate-Array (FPGA) besteht, das den Co-Beschleunigerdienst und einen Mikroprozessor (MPU) trägt, der den Konfigurationsparserdienst trägt;
das FPGA, der MPU und das Speicherarraymodul durch parallele Busse miteinander verbunden sind und das Mensch-Maschine-Ein-/Ausgabemodul und das Kommunikationsmodul alle an dem FPGA verbunden sind und das Leistungsmodul (103) andere Module in der heterogenen Schaltung hoher Dichte mit Strom versorgt.

32. Nuklearqualität-Sicherheitsanzeigevorrichtung nach Anspruch 19, **dadurch gekennzeichnet, dass** der Co-Beschleuniger aus einer Busadressenverwaltungseinheit, einer Grafik-Co-Beschleunigungseinheit, einer Mensch-Maschine-Eingabe-Co-Verarbeitungseinheit, einer Speicher-Co-Verarbeitungseinheit und einer Kommunikations-Co-Verarbeitungseinheit besteht; und
der Co-Beschleuniger mit dem Konfigurationsparser in der physischen Maschine durch einen parallelen Bus verbunden ist, um die co-beschleunigte Verarbeitung von Grafik, Kommunikation, Mensch-Maschine-Eingabe und Speicherung zu implementieren.

33. Nuklearqualität-Sicherheitsanzeigevorrichtung nach Anspruch 32, **dadurch gekennzeichnet, dass** Objekte der Grafik-Co-Beschleunigungseinheit 2D-Symbol-Kopieren, Trendkurvenkontinuität, Punktmatrixzeichen-Zeichnen und Dual-Cache-Steuern umfassen, die von dem Konfigurationsparser benötigte Bilddaten erzeugen und das LCD ansteuern können, um die Daten mittels Co-Beschleunigung anzuzeigen; und die Grafik-Co-Beschleunigungseinheit ein Steuermodul, einen Mehrschicht-Cache, Mehrschicht-Hardware-Fun, einen Schicht-Fuser und eine Dual-Cache-Steuerung umfasst.

34. Nuklearqualität-Sicherheitsanzeigevorrichtung nach Anspruch 33, **dadurch gekennzeichnet, dass** das Steuermodul die Mehrschicht-Hardware-Fun, den Schicht-Fuser und die Dual-Cache-Steuerung triggert, um die Bilddaten gemeinsam zu erzeugen und die LCD-Anzeigedaten gemäß den eingegebenen Steuerbefehlen und -parametern zu aktualisieren.

35. Nuklearqualität-Sicherheitsanzeigevorrichtung nach Anspruch 33, **dadurch gekennzeichnet, dass** der Mehrschicht-Cache ein Pufferspeicher ist, welcher der Mehrschicht-Hardware-Fun zugeordnet ist und temporär Symboldaten speichert;
die Mehrschicht-Hardware-Fun drei unabhängige Schichtsteuereinheiten, d. h., eine Punktmatrixzeichen-Zeicheneinheit, eine Trendkurvenkontinuitätseinheit und eine 2D-Symbolkopiereinheit, integriert;
jede Schichtsteuereinheit einen kontinuierlichen Adressraum in dem Mehrschicht-Cache als eigenen temporären Bilddaten-Cache monopolisiert; und
die Mehrschicht-Hardware-Fun es ermöglicht, dass drei Befehle von dem Steuermodul parallel ausgeführt werden.

36. Nuklearqualität-Sicherheitsanzeigevorrichtung nach Anspruch 33, **dadurch gekennzeichnet, dass** der Schicht-Fuser gemäß einem Befehl des Steuermoduls die Bilddaten verschiedener Bereiche in dem Mehrschicht-Cache in vollständige Bilddaten integriert und diese an die Dual-Cache-Steuerung sendet; und
gemäß dem Befehl des Steuermoduls der Schicht-Fuser zudem einige Bilddaten in dem Mehrschicht-Cache an die Dual-Cache-Steuerung senden kann, um lokale Daten zu aktualisieren.

37. Nuklearqualität-Sicherheitsanzeigevorrichtung nach Anspruch 33, **dadurch gekennzeichnet, dass** die Dual-Cache-Steuerung eine Laufwerksteuerung für zwei unabhängige physische Speichervorrichtungen bereitstellt, die abwechselnd Engineeringseitendaten-Caching- und Anzeigedaten-Caching-Funktionen in einer Timesharing-Weise implementieren.

38. Nuklearqualität-Sicherheitsanzeigevorrichtung nach Anspruch 32, **dadurch gekennzeichnet, dass** die Mensch-Maschine-Eingabe-Co-Verarbeitungseinheit verschiedene Mittel zur Mensch-Maschine-Eingabe-Detektion, d. h. einen auf physischen Tasten basierenden Filter- und Verriegelungsmechanismus und einen auf einem resistiven Touchscreen basierenden Koordinatendatenerfassungs- und Caching-Mechanismus, bereitstellt.

39. Nuklearqualität-Sicherheitsanzeigevorrichtung nach Anspruch 32, **dadurch gekennzeichnet, dass** die Speicher-Co-Verarbeitungseinheit aus einem Befehlssteuermodul, einem gepufferten 4KB-Dual-Port, RAM1, einem Datenkopier- und -komprimierungsmodul, einem Speichertimingtreibermodul und einem gepufferten 4KB-Dual-Port, RAM2, besteht, wobei das Befehlssteuermodul einen Co-Verarbeitungsbefehl oder einen Parameter von dem Konfigurationsparser decodiert, einen aktuellen Co-Verarbeitungsausführungszustand ausgibt und an den Konfigurationsparser zurückmeldet, ferner das Datenkopier- und - komprimierungsmodul und das Speichertimingtreibermodul entsprechend den decodierten Befehlen und Parametern einplant und eine Zustandsrückmeldung empfängt;
das Datenkopier- und -komprimierungsmodul den Datenkopiervorgang zwischen dem gepufferten 4KB-Dual-Port, RAM1, und dem gepufferten 4KB-Dual-Port, RAM2, implementiert, logische Daten beim Kopieren von Downlink-Daten in physische Daten komprimiert und physische Daten beim Kopieren von Uplink-Daten in logische Daten komprimiert,
das Speichertimingtreibermodul physisches Speicherzugriffstiming bereitstellt, Daten aus dem gepufferten 4KB-Dual-Port, RAM2, kopiert und diese beim Ausführen der Downlink-Datenoperation in den Speicher schreibt und die Daten beim Ausführen der Uplink-Datenoperation von dem Speicher in den gepufferten 4KB-Dual-Port, RAM2, schreibt;
der gepufferte 4KB-Dual-Port, RAM1, einen Datenkanal zwischen dem Konfigurationsparser und der Speicher-Co-Verarbeitungseinheit bereitstellt, der auf den gepufferten 4KB-Dual-Port, RAM1, in einer Timesharing-Weise Zugriff erhält; und
der gepufferte 4KB-Dual-Port, RAM2, einen Datenkanal zwischen dem Datenkopier- und -komprimierungsmodul und dem Speichertimingtreibermodul bereitstellt, der auf den gepufferten 4KB-Dual-Port, RAM2, in einer Timesharing-Weise Zugriff erhält.

40. Nuklearqualität-Sicherheitsanzeigevorrichtung nach Anspruch 32, **dadurch gekennzeichnet, dass** die Kommunikations-Co-Verarbeitungseinheit umfasst: Cold-Standby-Verbindungsverwaltung für Wartungskommunikationsfunktionen zwischen der physischen Maschine und dem übergeordneten Computer und zwischen der analogen Maschine und dem übergeordneten Computer, d. h., dass eine von einer Lichtwellenleiterverbindung 1 und einer Lichtwellenleiterverbindung 2 für die Wartungskommunikation mittels Parametereinstellung ausgewählt wird; isolierte Kommunikationsverbindungsverwaltung, d. h., isolierte Kommunikation zwischen der physischen Maschine und der analogen Maschine ist mittels einer RS485-Verbindung implementiert; Hot-Standby-Kommunikationsverbindungsverwaltung, d. h., die Hot-Standby-Kommunikation zwischen den physischen Maschinen ist mittels zwei Lichtwellenleiterverbindungen implementiert; und sichere Kommunikationsverbindungsverwaltung, d. h., sichere Kommunikation zwischen der physischen Maschine und dem Sicherheitsebenen-DCS ist über zwei redundante Hot-Standby-Lichtwellenleiterverbindungen im laufenden Betrieb implementiert.

41. Nuklearqualität-Sicherheitsanzeigevorrichtung nach Anspruch 18, **dadurch gekennzeichnet, dass** die analoge Maschine ferner mit einem Micro-X86-Motherboard eingesetzt wird;
der Konfigurationssimulator auf dem Mikro-X86-Motherboard läuft und die Fähigkeit besitzt, die Prozessdaten des Simulationlaufs über einen langen Zeitraum aufzuzeichnen und den historischen Prozess, der abgelaufen ist, zu wiederholen.

42. Nuklearqualität-Sicherheitsanzeigevorrichtung nach Anspruch 18, **dadurch gekennzeichnet, dass** eine Hot-Standby-Funktion der physischen Maschine von zwei physischen Maschinen durch Hot-Standby-Kommunikation und Hot-Standby-Umschaltung implementiert wird und die folgenden Verfahrensweisen umfasst:
dass beim Einschaltvorgang eine anfängliche Erlaubnis einer Mastervorrichtung und einer Backupvorrichtung durch eine erste Einschaltbeurteilung und eine gegenseitige Fehlerbeurteilung der physischen Maschinen bestimmt wird;
im laufenden Prozess die Mastervorrichtung und die Backupvorrichtung periodisch Diagnosedaten und Netzwerkvariablendaten von dem Sicherheitsebenen-DCS austauschen;
eine Slavevorrichtung die eigenen Mensch-Maschine-Eingabedaten deaktiviert; und eine Engineeringseitenanzeige und ein Mensch-Maschine-Antwortverhalten der Mastervorrichtung auf der Backupvorrichtung synchron reproduziert werden; und
beim Umschaltvorgang das Datenaustauschverhalten zwischen der Mastervorrichtung und der Backupvorrichtung sowie zwischen der Master- und der Backupvorrichtung und dem Sicherheitsebenen-DCS nicht beeinträchtigt wird; und die Mastervorrichtung und die Backupvorrichtung vollständig umgeschaltet werden nach den Prozessen von: Fehlerdetektion und Berechtigungsumschaltungsvalidierung der Mastervorrichtung, Validierung der Bedingungen zur Aufrüstung der Backupvorrichtung zu der Mastervorrichtung, Aktualisierung der Datenidentifikation der Mastervorrichtung und der Backupvorrichtung, Aktivierung der eigenen Mensch-Maschine-Eingabe durch die Backupvorrichtung und Deaktivierung der eigenen Mensch-Maschine-Eingabe durch die Mastervorrichtung.

43. Nuklearqualität-Sicherheitsanzeigevorrichtung nach Anspruch 18, **dadurch gekennzeichnet, dass** die Vorrichtung unter Verwendung einer analogen Maschine in Koordination mit einer physischen Maschine oder zwei physischen Hot-Standby-Maschinen implementiert ist, um ein digitales Twinning der physischen Maschinen in Betriebs- und Wartungsphasen zu implementieren, was die synchrone Reproduktion des Mensch-Maschine-Interaktionsverhaltens, langfristige Prozessdatenaufzeichnung und die Zustandsanalyse nach einem Unfall sowie die Überwachung und Analyse von Selbstdiagnosefehlerdaten der physischen Maschinen umfasst.

44. Nuklearqualität-Sicherheitsanzeigevorrichtung nach Anspruch 43, **dadurch gekennzeichnet, dass** die Mensch-Maschine-Eingabedaten der physischen Maschine und die Netzwerkvariablendaten des Sicherheitsebenen-DCS an die analoge Maschine weitergeleitet werden; und die analoge Maschine das Mensch-Maschine-Interaktionsverhalten auf der analogen Maschine in Echtzeit synchron reproduziert, indem sie die eigene Mensch-Maschine-Eingabe deaktiviert und Daten von der physischen Maschine verwendet.

45. Nuklearqualität-Sicherheitsanzeigevorrichtung nach Anspruch 43, **dadurch gekennzeichnet, dass** die Selbstdiagnosefehlerdaten der physischen Maschine periodisch zur Modellierungsanalyse an die analoge Maschine gesendet werden, um eine präventive Wartung und eine Frühwarnvorhersage zu realisieren, und die Modellierungsanalyse umfasst:
eine taktabhängige Instabilitätsanalyse;
wobei eine Taktinstabilität ausgewertet und ein vorbeugender Wartungsalarm gegeben wird, indem Zykluszeitwerte von der physischen Maschine und Zeitwerte von Datenblöcken innerhalb eines Zyklus sowie die empirischen Werte, die in dem Test- und Produktionsprozess durch die Trendstatistik- und Akkumulationsprozesse erhalten wurden, verwendet werden;
Analyse der Stromversorgungsinstabilität;
wobei eine Stromversorgungsinstabilität bewertet und ein präventiver Wartungsalarm gegeben wird, indem periodische Leistungsdaten, die von der physischen Maschine erfasst wurden, und empirische Daten, die während des Testens und der Produktion erhalten wurden, durch die Verfahren von Trendstatistik, Varianzberechnung, Spitze-Spitze-Berechnung, Effektivwertberechnung und Statistik anormaler Spitzenwerte verwendet werden;
Instabilitätsanalyse der Mensch-Maschine-Eingabevorrichtung;
wobei ein Alterungsgrad eines resistiven Touchscreens oder ein Instabilitätsgrad einer Koordinatendatenerfassung und die Kontaktgüte von physischen Tasten bewertet werden und der präventive Wartungsalarm gegeben wird, indem Koordinatendaten des resistiven Touchscreens von der physischen Maschine und Verzögerungsfilterparameter der physischen Tasten sowie empirische Werte, die aus den Produktions- und Testprozessen durch die Verfahren von Trendstatistik und Varianzberechnung erhalten wurden, verwendet werden;
Speichervorrichtungsinstabilitätsanalyse;
wobei ein Schreibbeständigkeitsstatus einer Flash-Vorrichtung bewertet und der präventive Wartungsalarm gegeben wird, indem die Schreibzugriffszeiten und Löschzeiten der Flash-Vorrichtung von der physischen Maschine und die Standardschreibzugriffszeiten der Flash-Vorrichtung des Zulieferers verwendet werden.

## Revendications

1. Système d'analyse de configuration de dispositif, comprenant un éditeur de configuration, un compilateur de configuration et un analyseur de configuration ;
dans lequel l'éditeur de configuration met en oeuvre une configuration de paramètres et de conception de page de configuration d'ingénierie pour générer un fichier de description xml de données de configuration d'utilisateur ;
le compilateur de configuration convertit le fichier de description xml de données de configuration d'utilisateur pour générer un fichier de données de configuration ; et
l'analyseur de configuration est déployé sur une machine physique ou une machine analogique ou un ordinateur supérieur du dispositif, et analyse le fichier de données de configuration et génère périodiquement des données d'exécution, comprenant des données de variables internes, des données de page d'ingénierie et des données d'exploitation homme-machine, **caractérisé en ce que** le dispositif est un dispositif d'affichage de sécurité de qualité nucléaire et dans lequel l'analyseur de configuration forme un simulateur de configuration avec un module de commande d'instruction, une interface entrée/sortie, E/S, un module de gestion de données, un module d'analyse xml de variables de réseau et une mémoire tampon E/S ;
dans lequel le module de commande d'instruction permet différents modes de fonctionnement par la commande et la planification du module de gestion de données, de l'analyseur de configuration, du module d'analyse xml de variables de réseau et de l'interface E/S ;
l'interface E/S met en oeuvre une simulation de fonctions matérielles possédées par la machine physique ;
le module de gestion de données fournit un stockage partitionné et une gestion de données de processus d'exécution générées périodiquement par l'analyseur de configuration, et les données de processus d'exécution peuvent être rechargées pour une exécution dans l'analyseur de configuration, en reproduisant ainsi un processus d'exécution historique ;
le module d'analyse xml de variables de réseau affiche graphiquement une liste de variables de réseau et fournit une surveillance de simulation et une modulation d'intensité de simulation ; et
la mémoire tampon E/S stocke des données de processus à charger ou à générer périodiquement par l'analyseur de configuration.

2. Système d'analyse de configuration de dispositif d'affichage de sécurité de qualité nucléaire selon la revendication 1, **caractérisé en ce que** l'analyseur de configuration est déployé sur la machine physique pour analyser les données de configuration, restaurer la page de configuration d'ingénierie en coordination avec un co-accélérateur, et exécuter une interaction homme-machine, une communication de données et un stockage de données en fonction de la configuration de paramètres.

3. Système d'analyse de configuration de dispositif d'affichage de sécurité de qualité nucléaire selon la revendication 1, **caractérisé en ce que**
le simulateur de configuration est déployé sur la machine analogique pour simuler l'exploitation de la machine physique, restaurer la page de configuration d'ingénierie et exécuter une interaction homme-machine en fonction de la configuration de paramètres, et il est également capable d'enregistrer ou de sauvegarder les données de processus d'exécution, d'analyser des données d'exploitation et de maintenance et de relire un accident ;
ou le simulateur de configuration est déployé sur l'ordinateur supérieur uniquement à des fins de vérification de la page de configuration d'ingénierie.

4. Système d'analyse de configuration de dispositif d'affichage de sécurité de qualité nucléaire selon la revendication 3, **caractérisé en ce que**, lorsque le simulateur de configuration fonctionne dans le mode de vérification de page de configuration d'ingénierie :
le module de commande d'instruction envoie une instruction de travail de vérification de page de configuration d'ingénierie ;
le module d'analyse xml de variables de réseau présente graphiquement des listes de variables de réseau de réception et d'envoi, dans lequel la liste de variables de réseau de réception fournit une fonction de surveillance dynamique et la liste de variables de réseau d'envoi fournit une fonction de modulation d'intensité de simulation ; et
l'interface E/S simule une touche physique, un écran tactile résistif, une communication de réseau et un accès de données

5. Système d'analyse de configuration de dispositif d'affichage de sécurité de qualité nucléaire selon la revendication 3, **caractérisé en ce que**, lorsque le simulateur de configuration fonctionne dans un mode de machine analogique, un étage d'exécution de simulation et un étage d'exécution de relecture sont divisés sur la base d'un ordre chronologique ;
à l'étage d'exécution de simulation :
le module de commande d'instruction envoie une instruction de travail d'exécution de simulation ;
à la réception de l'instruction de travail d'exécution de simulation, l'analyseur de configuration analyse et exécute périodiquement les données de configuration et envoie périodiquement les données de processus d'exécution à une mémoire tampon de sortie en vue de leur stockage ;
à la réception de l'instruction de travail d'exécution de simulation, l'interface E/S lit des entrées homme-machine et des entrées de variables de réseau, envoie les entrées de variables de réseau et les entrées homme-machine en parallèle à l'analyseur de configuration et au module de gestion de données, et fournit une simulation d'accès de stockage ;
à la réception de l'instruction de travail d'exécution de simulation, le module de gestion de données stocke périodiquement et différentiellement des données dans la mémoire tampon d'entrée et de sortie homme-machine ;
à l'étage d'exécution de relecture :
le module de commande d'instruction envoie une instruction de travail d'exécution de relecture ; et
à la réception de l'instruction de travail d'exécution de relecture, l'analyseur de configuration recharge les données de processus d'exécution stockées à l'étage d'exécution de simulation, de manière à reproduire un processus historique, des données et une exploitation de l'étage d'exécution de simulation.

6. Système d'analyse de configuration de dispositif d'affichage de sécurité de qualité nucléaire selon l'une quelconque des revendications 1 à 5, **caractérisé en ce qu'**un en-tête des données de configuration générées par le compilateur de configuration présente un code de contrôle ;
les données de configuration se composent de l'en-tête et d'un bloc de données ;
l'en-tête stocke des informations de contrôle, des informations de longueur, des informations de numéro de version, des informations de description, des informations de base de blocs de données fonctionnels et des adresses de décalage des blocs de données fonctionnels dans les données de configuration ; et
le bloc de données stocke des informations de page d'ingénierie, des informations de logique de commutation et des informations d'association de variables.

7. Système d'analyse de configuration de dispositif d'affichage de sécurité de qualité nucléaire selon la revendication 6, **caractérisé en ce que** le bloc de données comprend un bloc de couleur, un bloc de variable, un bloc de tâche, un bloc de page, un bloc d'alarme et un bloc de ressource d'image ;
dans lequel le bloc de couleur est un bloc de données composé d'une pluralité de lignes horizontales de couleur et est utilisé pour caractériser une anomalie de bit de masse de variables de réseau associées à des icônes ;
le bloc de variable comprend un bloc de variable de réseau, un bloc de variable de système et un bloc de variable locale, et se compose d'un premier indice et d'un élément de variable ;
le bloc de tâche comprend un bloc de compression de réseau, un bloc de décompression de réseau et un bloc d'exécution périodique, et se compose d'un deuxième indice et d'une fonction Fun unique ; le bloc de page se compose d'un indice de page et d'informations de configuration d'une page d'ingénierie unique ;
le bloc d'alarme se compose d'un premier indice de ressource et d'une configuration d'alarme ; et
le bloc de ressource d'image se compose d'un deuxième indice de ressource, d'informations d'indice d'une ressource d'image unique et de données spécifiques de la ressource d'image.

8. Système d'analyse de configuration de dispositif d'affichage de sécurité de qualité nucléaire selon la revendication 7, **caractérisé en ce que** l'élément de variable occupe 32 octets au total : 2 octets pour un champ de type, 2 octets pour un champ d'indice, 2 octets pour un champ de source de variable et 26 octets pour un champ de données de variable.

9. Système d'analyse de configuration de dispositif d'affichage de sécurité de qualité nucléaire selon la revendication 7, **caractérisé en ce que** la configuration d'alarme comprend un indice d'image de nom de variable, un premier indice d'image pour un clignotement d'alarme, un deuxième indice d'image pour un clignotement d'alarme, un indice d'image de signe d'alarme, un indice d'image de description d'alarme, un niveau d'alarme et une source d'alarme.

10. Système d'analyse de configuration de dispositif d'affichage de sécurité de qualité nucléaire selon la revendication 7, **caractérisé en ce que** les informations d'indice d'une ressource d'image unique comprennent une adresse de décalage de la ressource d'image et un nombre d'octets occupés par celle-ci ; et les données spécifiques de la ressource d'image comprennent une largeur, une hauteur et une valeur de pixel spécifique.

11. Système d'analyse de configuration de dispositif d'affichage de sécurité de qualité nucléaire selon la revendication 7, **caractérisé en ce que** les informations de configuration de la page d'ingénierie unique se composent de données d'en-tête, de données d'en-tête de réponse homme-machine, d'une séquence de fonction Fun de réponse homme-machine, d'une séquence de fonction Fun de préparation de page et d'une séquence de fonction Fun de rafraîchissement de page ;
dans lequel les données d'en-tête de réponse homme-machine se composent d'un numéro de série d'en-tête et de données de configuration répondant à un événement homme-machine unique ; et
la séquence de fonction Fun de réponse homme-machine, la séquence de fonction Fun de préparation de page et la séquence de fonction Fun de rafraîchissement de page se composent toutes d'un numéro de série de fonction Fun et d'une fonction Fun.

12. Système d'analyse de configuration de dispositif d'affichage de sécurité de qualité nucléaire selon la revendication 11, **caractérisé en ce que** les données de configuration répondant à un événement homme-machine unique se composent d'un code de touche d'entrée homme-machine, d'une plage de coordonnées d'écran tactile, d'un champ réservé et d'un indice de fonction Fun.

13. Système d'analyse de configuration de dispositif d'affichage de sécurité de qualité nucléaire selon la revendication 11, **caractérisé en ce que** la fonction Fun se compose d'un identifiant numérique et de paramètres.

14. Système d'analyse de configuration de dispositif d'affichage de sécurité de qualité nucléaire selon l'une quelconque des revendications 1 à 5, **caractérisé en ce que** l'éditeur de configuration fournit une interface graphique pour une configuration de page d'ingénierie, une logique de commutation de page d'ingénierie, une association de variables et une gestion de configuration de bibliothèque d'icônes ;
dans lequel les résultats d'une configuration de page d'ingénierie, d'une logique de commutation de page d'ingénierie et d'une association de variables sont stockés dans un fichier xml.

15. Système d'analyse de configuration de dispositif d'affichage de sécurité de qualité nucléaire selon l'une quelconque des revendications 1 à 5, **caractérisé en ce que** l'éditeur de configuration comprend un module d'interface principal, un module de gestion d'ingénierie, un module de gestion de variables, un module de gestion de modèles de panneau d'exploitation, un module de gestion de ressources d'image, un module de gestion de paramètres importants, un module de gestion de page, un module de gestion de style de commande et un module de sécurité d'informations ;
dans lequel le module d'interface principal fournit une fenêtre pour une vue globale et une exploitation de l'éditeur de configuration ;
le module de gestion d'ingénierie fournit une gestion de répertoire d'ingénierie, une organisation de page et une gestion d'entrée de variables et de ressources d'icônes ;
le module de gestion de variables fournit une création de variables ainsi que la configuration de valeurs initiales, de valeurs effectives et d'informations d'alarme ;
le module de gestion de modèle de panneau d'exploitation fournit une création et une configuration de panneaux d'exploitation de dispositif standard ou non standard ;
le module de gestion de ressources d'image fournit une gestion d'importation d'icônes et de bibliothèque d'icônes requise par des utilisateurs ;
le module de gestion de paramètres importants fournit une gestion de configuration de paramètres de groupe PLM et de données d'alarme ;
le module de gestion de page fournit une création, une modification, une suppression et une configuration de pages de configuration d'ingénierie ;
le module de gestion de style de commande fournit une édition de style et une gestion de différents types de commande ; et
le module de sécurité d'informations chiffre et déchiffre des fichiers d'ingénierie, des fichiers de configuration et des fichiers de variables d'un projet de configuration dans le but de garantir l'authenticité et l'intégrité des données.

16. Système d'analyse de configuration de dispositif d'affichage de sécurité de qualité nucléaire selon l'une quelconque des revendications 1 à 5, **caractérisé en ce que**, au cours de l'exécution, l'éditeur de configuration déchiffre simultanément des données xml tout en lisant les données xml de fichiers d'ingénierie, de fichiers de configuration et de fichiers de variables, puis chiffre et stocke les données xml générées par la page de configuration d'ingénierie.

17. Système d'analyse de configuration de dispositif d'affichage de sécurité de qualité nucléaire selon l'une quelconque des revendications 1 à 5, **caractérisé en ce que** le compilateur de configuration convertit un fichier de description xml de données de configuration d'utilisateur générées par l'éditeur de configuration en fichier de données de configuration dans les étapes spécifiques suivantes :
l'ouverture d'un fichier xml de configuration d'ingénierie ;
le chargement du fichier xml de configuration d'ingénierie avec des données, pendant l'exécution de l'opération de déchiffrement du fichier xml dans le processus de chargement ;
la vérification des données chargées et la conversion de tous les types de données chargées en données d'une structure de données de configuration qui est configurée pour le dispositif d'affichage de sécurité de qualité nucléaire ; et
l'écriture des données générées de la structure de données de configuration dans un fichier binaire spécifié pour obtenir un fichier de configuration de données de configuration.

18. Dispositif d'affichage de sécurité de qualité nucléaire, **caractérisé en ce qu'**il comprend un ordinateur supérieur, une machine physique et une machine analogique ; dans lequel l'ordinateur supérieur est déployé avec l'éditeur de configuration et le compilateur de configuration pour le système d'analyse de configuration selon l'une quelconque des revendications 1 à 17 ;
la machine physique est déployée avec l'analyseur de configuration pour le système d'analyse de configuration selon l'une quelconque des revendications 1 à 17 ;
la machine analogique est déployée avec le simulateur de configuration pour le système d'analyse de configuration selon l'une quelconque des revendications 1 à 5 ;
l'ordinateur supérieur met en oeuvre une configuration de page d'ingénierie hors-ligne et télécharge un fichier de données de configuration généré sur la machine physique et la machine analogique via un réseau de communication de maintenance ;
la machine physique acquiert des données d'un système de commande distribué, DCS, de niveau de sécurité, analyse les données de configuration par l'analyseur de configuration pour restaurer une page de configuration d'ingénierie, et exécute une interaction homme-machine, une communication de données et un stockage de données selon une configuration de paramètres ; et
la machine analogique établit une connexion de communication avec la machine physique via un réseau de communication isolé pour acquérir les données du système de commande distribué, DCS, de niveau de sécurité, et des données de défaut d'autodiagnostic de la machine physique, simule un processus d'exécution de la machine physique via le simulateur de configuration, et enregistre ou stocke des données de processus d'exécution, de manière à mettre en oeuvre les fonctions de collecte et d'analyse de données d'exploitation et de maintenance et de relecture d'un accident.

19. Dispositif d'affichage de sécurité de qualité nucléaire selon la revendication 18, **caractérisé en ce que** la machine physique est en outre déployée avec :
un co-accélérateur et un circuit hétérogène de grande densité ;
l'analyseur de configuration de la machine physique analyse le fichier de données de configuration, restaure la page de configuration d'ingénierie en coordination avec le co-accélérateur, et exécute une interaction homme-machine, une communication de données et un stockage de données selon la configuration de paramètres ; et
le circuit hétérogène de grande densité sert d'entité matérielle qui effectue divers services de la machine physique.

20. Dispositif d'affichage de sécurité de qualité nucléaire selon la revendication 18, **caractérisé en ce que** la machine physique et la machine analogique sont d'une structure sismique intégrée ;
la structure sismique intégrée comprend un panneau arrière (1), une plaque de pression (11) agencée au-dessous du panneau arrière (1) et un panneau avant (8) agencé au-dessous de la plaque de pression (11) ; le panneau arrière (1) est connecté fixement au panneau avant (8) pour former un boîtier ; une carte de circuit de traitement principale (3) est agencée sur le panneau de la plaque de pression (11) ; un assemblage d'écran (9) est agencé entre la plaque de pression (11) et le panneau avant (8) de telle manière que l'assemblage d'écran (9) soit placé à l'intérieur du panneau avant (8) et fixé au panneau avant (8) au moyen d'au moins un deuxième coussinet amortisseur de choc (13) dans une direction Z et d'un troisième coussinet amortisseur de choc (12) dans des directions X et Y et que la plaque de pression (11) soit pressée sur l'assemblage d'écran (9) par un dispositif de pression, de sorte que le coussinet amortisseur de choc et un caoutchouc conducteur puissent être élastiquement déformés ; une ligne sortante interne sort de l'extrémité arrière du dispositif d'affichage de sécurité de qualité nucléaire au moyen d'un module d'interface (16) qui se compose d'un bloc de montage de module d'interface (1601) et d'une carte de circuit de module d'interface (1602) fixée au bloc de montage de module d'interface (1601) par des vis et connectée à la carte de circuit de traitement principale (3) par des connecteurs ; le module d'interface (16) est fixé au panneau avant (8) pour limiter le déplacement du module d'interface (16) ; et des claviers (7) des deux côtés sont agencés à l'intérieur du panneau avant (8).

21. Dispositif d'affichage de sécurité de qualité nucléaire selon la revendication 20, **caractérisé en ce que** l'assemblage d'écran (9) comprend un matériau thermiquement conducteur (902), un écran à cristaux liquides, LCD (904), un premier caoutchouc conducteur (905), une vitre de blindage (906), un premier coussinet amortisseur de choc (907) et un écran tactile (908) agencés séquentiellement de haut en bas ; l'avant de l'écran tactile (908) est étroitement attaché à l'au moins un deuxième coussinet amortisseur de choc (13) et au troisième coussinet amortisseur de choc (12), et le premier coussinet amortisseur de choc (907) est attaché à l'arrière de l'écran tactile (908) ; une surface non conductrice de la vitre de blindage (906) est attachée au premier coussinet amortisseur de choc (907), et le premier caoutchouc conducteur (905) est attaché à une surface conductrice de la vitre de blindage (906) ; une sérigraphie de la vitre de blindage (906) est pressée à l'intérieur du panneau avant (8) en utilisant un cadre de pression (903), une surface visible du LCD (904) est étroitement attachée au premier caoutchouc conducteur (905), le matériau thermiquement conducteur est agencé à l'arrière du LCD (904), et le panneau avant (8), le panneau arrière (1) et la vitre de blindage (906) forment une cavité de blindage complète.

22. Dispositif d'affichage de sécurité de qualité nucléaire selon la revendication 20, **caractérisé en ce que** le panneau avant (8) est d'une structure en forme de cadre, une première cavité fixe (801) est prévue à l'intérieur du panneau avant (8), une deuxième cavité fixe (802) est prévue sur le côté du panneau avant (8), et la deuxième cavité fixe (802) est située à côté de la première cavité fixe (801).

23. Dispositif d'affichage de sécurité de qualité nucléaire selon la revendication 22, **caractérisé en ce que** l'assemblage d'écran (9) est agencé à l'intérieur de la première cavité fixe (801) et est en contact avec la première cavité fixe (801) au moyen de l'au moins un deuxième coussinet amortisseur de choc (13) et du troisième coussinet amortisseur de choc (12).

24. Dispositif d'affichage de sécurité de qualité nucléaire selon la revendication 22, **caractérisé en ce que** la deuxième cavité fixe (802) est pourvue de claviers (7), et un espacement entre la deuxième cavité fixe (802) et les claviers (7) est rempli d'un troisième caoutchouc conducteur (15).

25. Dispositif d'affichage de sécurité de qualité nucléaire selon la revendication 20, **caractérisé en ce qu'**une sortie d'air (807) est prévue au sommet du panneau avant (8), et la surface de la sortie d'air (807) est pourvue d'un premier écran de blindage (5) pour un blindage électromagnétique.

26. Dispositif d'affichage de sécurité de qualité nucléaire selon la revendication 20, **caractérisé en ce que** le panneau arrière (1) comprend une plaque de recouvrement arrière (101), un module d'alimentation électrique (103), un module de filtrage (102) et une interface d'alimentation électrique, dans lequel le module d'alimentation électrique (103), le module de filtrage (102) et l'interface d'alimentation électrique sont tous agencés sur la plaque de recouvrement arrière (101).

27. Dispositif d'affichage de sécurité de qualité nucléaire selon la revendication 26, **caractérisé en ce qu'**une entrée d'air (14) est prévue sur la plaque de recouvrement arrière (101) du panneau arrière (1) et la surface de l'entrée d'air (14) est pourvue d'un deuxième écran de blindage (10) pour un blindage électromagnétique.

28. Dispositif d'affichage de sécurité de qualité nucléaire selon la revendication 20, **caractérisé en ce que** l'espacement entre le panneau avant (8) et le panneau arrière (1) est rempli d'un deuxième caoutchouc conducteur (2).

29. Dispositif d'affichage de sécurité de qualité nucléaire selon la revendication 20, **caractérisé en ce que** le module d'interface (16) est connecté à la carte du circuit de traitement principale (3) au moyen d'un connecteur (1603) et est fixé à une paroi intérieure (808) du panneau avant (8), et un port de connexion du module d'interface (16) s'étend hors du dispositif d'affichage à travers le panneau arrière (1).

30. Dispositif d'affichage de sécurité de qualité nucléaire selon la revendication 20, **caractérisé en ce qu'**une carte de circuit de clavier (701), un dessus de touche (702) et un pavé de touches en silicone (703) sont en outre agencés entre les claviers (7) et le panneau avant (8).

31. Dispositif d'affichage de sécurité de qualité nucléaire selon la revendication 19, **caractérisé en ce que** le circuit hétérogène de grande densité se compose d'un groupe de contrôleur hétérogène, d'un module de réseau de stockage, d'un module de communication, d'un module d'alimentation électrique (103) et d'un module d'entrée/sortie homme-machine ;
dans lequel le groupe de contrôleur hétérogène se compose d'un prédiffusé programmable, FPGA, qui porte le service co-accélérateur et d'un microprocesseur (MPU) qui porte le service d'analyseur de configuration ;
le prédiffusé programmable, FPGA, le microprocesseur, MPU, et le module de réseau de stockage sont interconnectés par des bus parallèles, et le module d'entrée/sortie homme-machine et le module de communication sont tous connectés sur le prédiffusé programmable, FPGA, et
le module d'alimentation électrique (103) fournit une alimentation électrique à d'autres modules dans le circuit hétérogène de grande densité.

32. Dispositif d'affichage de sécurité de qualité nucléaire selon la revendication 19, **caractérisé en ce que** le co-accélérateur se compose d'une unité de gestion d'adresses de bus, d'une unité de co-accélération graphique, d'une unité de co-traitement d'entrée homme-machine, d'une unité de co-traitement de stockage et d'une unité de co-traitement de communication ; et
le co-accélérateur est interconnecté avec l'analyseur de configuration dans la machine physique par un bus parallèle pour mettre en oeuvre le traitement co-accéléré de graphique, de communication, d'entrée homme-machine et de stockage.

33. Dispositif d'affichage de sécurité de qualité nucléaire selon la revendication 32, **caractérisé en ce que** des objets de l'unité de co-accélération graphique comprennent une copie d'icône 2D, une continuité de courbe de tendance, un tracé de caractère de matrice de points et une commande de cache double, pouvant générer des données d'images requises par l'analyseur de configuration et amener le LCD à afficher les données au moyen d'une co-accélération ; et l'unité de co-accélération graphique comprend un module de commande, un cache multicouche, une fonction Fun de matériel multicouche, une unité de fusion de couches et un contrôleur de cache double.

34. Dispositif d'affichage de sécurité de qualité nucléaire selon la revendication 33, **caractérisé en ce que** le module de commande déclenche la fonction Fun de matériel multicouche, l'unité de fusion de couches et le contrôleur de cache double pour générer en coopération les données d'images et mettre à jour les données d'affichage de LCD en fonction des instructions et des paramètres de commande d'entrée.

35. Dispositif d'affichage de sécurité de qualité nucléaire selon la revendication 33, **caractérisé en ce que** le cache multicouche est un stockage tampon correspondant à la fonction Fun de matériel multicouche et stocke provisoirement des données d'icône ;
la fonction Fun de matériel multicouche intègre trois unités de commande de couches indépendantes, à savoir une unité de tracé de caractère de matrice de points, une unité de continuité de courbe de tendance et une unité de copie d'icône 2D ;
chaque unité de commande de couches monopolise un espace d'adresse continu dans le cache multicouche en tant que son propre cache temporaire de données d'images ; et
la fonction Fun de matériel multicouche permet d'exécuter en parallèle trois instructions du module de commande.

36. Dispositif d'affichage de sécurité de qualité nucléaire selon la revendication 33, **caractérisé en ce que**, selon une instruction du module de commande, l'unité de fusion de couches intègre les données d'images de différentes zones dans le cache multicouche dans des données d'images complètes, et les envoie au contrôleur de cache double ; et
selon l'instruction du module de commande, l'unité de fusion de couches peut également envoyer certaines données d'images dans le cache multicouche au contrôleur de cache double pour mettre à jour des données locales.

37. Dispositif d'affichage de sécurité de qualité nucléaire selon la revendication 33, **caractérisé en ce que** le contrôleur de cache double fournit une commande d'entraînement pour deux dispositifs de stockage physiques indépendants qui mettent en oeuvre en alternance des fonctions de mise en cache de données de page d'ingénierie et de mise en cache de données d'affichage d'une manière en partage de temps.

38. Dispositif d'affichage de sécurité de qualité nucléaire selon la revendication 32, **caractérisé en ce que** l'unité de co-traitement d'entrée homme-machine fournit divers moyens de détection d'entrée homme-machine, à savoir un mécanisme de filtrage et de verrouillage basé sur touches physiques et un mécanisme d'acquisition et de mise en cache de données de coordonnées basé sur écran tactile résistif.

39. Dispositif d'affichage de sécurité de qualité nucléaire selon la revendication 32, **caractérisé en ce que** l'unité de co-traitement de stockage se compose d'un module de commande d'instruction, d'une RAM1 à deux ports à mémoire tampon de 4 ko, d'un module de copie et de compression de données, d'un module de pilotage de temporisation de stockage et d'une RAM2 à deux ports à mémoire tampon de 4 ko, dans lequel le module de commande d'instruction décode une instruction de co-traitement ou un paramètre de l'analyseur de configuration, délivre et fournit un état d'exécution de co-traitement courant à l'analyseur de configuration, planifie le module de copie et de compression de données et le module de pilotage de temporisation de stockage en fonction des instructions et des paramètres décodés, et reçoit une rétroaction d'état ;
le module de copie et de compression de données met en oeuvre une opération de copie de données entre la RAM1 à deux ports à mémoire tampon de 4 ko et la RAM2 à deux ports à mémoire tampon de 4 ko, compresse des données logiques en données physiques lors de la copie de données de liaison descendante, et compresse des données physiques en données logiques lors de la copie de données de liaison montante ;
le module de pilotage de temporisation de stockage fournit une temporisation d'accès de stockage physique, copie des données de la RAM2 à deux ports à mémoire tampon de 4 ko et les écrit dans le stockage lors de l'exécution de l'opération de données de liaison descendante, et écrit les données du stockage dans la RAM2 à deux ports à mémoire tampon de 4 ko lors de l'exécution de l'opération de données de liaison montante ;
la RAM1 à deux ports à mémoire tampon de 4 ko fournit un canal de données entre l'analyseur de configuration et l'unité de co-traitement de stockage, qui obtient un accès à la RAM1 à deux ports à mémoire tampon de 4 ko d'une manière en partage de temps ; et
la RAM2 à deux ports à mémoire tampon de 4 ko fournit un canal de données entre le module de copie et de compression de données et le module de pilotage de temporisation de stockage, qui obtient un accès à la RAM2 à deux ports à mémoire tampon de 4 ko d'une manière en partage de temps.

40. Dispositif d'affichage de sécurité de qualité nucléaire selon la revendication 32, **caractérisé en ce que** l'unité de co-traitement de communication comprend : une gestion de liaison cold standby pour des fonctions de communication de maintenance entre la machine physique et l'ordinateur supérieur, et entre la machine analogique et l'ordinateur supérieur, c'est-à-dire que l'une d'une liaison de fibre optique 1 et d'une liaison de fibre optique 2 est sélectionnée pour une communication de maintenance au moyen d'un réglage de paramètres ; une gestion de liaison de communication isolée, c'est-à-dire qu'une communication isolée entre la machine physique et la machine analogique est mise en oeuvre au moyen d'une liaison RS485 ; une gestion de liaison de communication hot standby, c'est-à-dire que la communication hot standby entre les machines physiques est mise en oeuvre au moyen de deux liaisons de fibre optique ; et une gestion de liaison de communication sécurisée, c'est-à-dire qu'une communication sécurisée entre la machine physique et le système de commande distribué, DCS, de niveau de sécurité est mise en oeuvre au moyen de deux liaisons de fibre optique redondantes hot standby.

41. Dispositif d'affichage de sécurité de qualité nucléaire selon la revendication 18, **caractérisé en ce que** la machine analogique est en outre déployée avec une micro carte mère X86 ;
le simulateur de configuration fonctionne sur la micro carte mère X86 et dispose de la capacité d'enregistrer les données de processus d'exécution de simulation pendant une longue durée et de relire le processus historique qui a été exécuté.

42. Dispositif d'affichage de sécurité de qualité nucléaire selon la revendication 18, **caractérisé en ce qu'**une fonction hot standby de la machine physique est mise en oeuvre par deux machines physiques par l'intermédiaire d'une communication hot standby et d'une commutation hot standby, et comprend les procédures suivantes :
dans un processus de démarrage à la mise sous tension, une permission initiale d'un dispositif maître et d'un dispositif de secours est déterminée par un premier jugement de démarrage et un jugement de défaut mutuel des machines physiques ;
dans le processus d'exécution, le dispositif maître et le dispositif de secours échangent périodiquement des données de diagnostic et des données de variables de réseau provenant du système de commande distribué, DCS, de niveau de sécurité ;
un dispositif esclave désactive ses propres données d'entrée homme-machine ; et un affichage de page d'ingénierie et un comportement de réponse homme-machine du dispositif maître sont reproduits de manière synchrone sur le dispositif de secours ; et
dans un processus de commutation, un comportement d'échange de données entre le dispositif maître et le dispositif de secours, et entre les dispositifs maître et de secours et le système de commande distribuée, DCS, de niveau de sécurité n'est pas affecté ; et le dispositif maître et le dispositif de secours sont complètement commutés après les processus suivants : détection de défaut et validation de commutation de permission du dispositif maître, validation de conditions de mise à niveau du dispositif de secours au dispositif maître, mise à jour d'identification de données du dispositif maître et du dispositif de secours, activation de sa propre entrée homme-machine par le dispositif de secours et désactivation de sa propre entrée homme-machine par le dispositif maître.

43. Dispositif d'affichage de sécurité de qualité nucléaire selon la revendication 18, **caractérisé en ce que** le dispositif est mis en oeuvre par l'utilisation d'une machine analogique en coordination avec une machine physique ou deux machines physiques hot standby, dans le but de mettre en oeuvre un jumelage numérique des machines physiques dans des étages d'exploitation et de maintenance, ce qui inclut une reproduction synchrone d'un comportement d'interaction homme-machine, un enregistrement de données de processus à long terme et une analyse de condition après accident, ainsi que la surveillance et l'analyse de données de défaut d'autodiagnostic de machines physiques.

44. Dispositif d'affichage de sécurité de qualité nucléaire selon la revendication 43, **caractérisé en ce que** les données d'entrée homme-machine de la machine physique et les données de variables de réseau du système de commande distribuée, DCS, de niveau de sécurité sont transférées à la machine analogique ; et la machine analogique reproduit de manière synchrone le comportement d'interaction homme-machine sur la machine analogique en temps réel par la désactivation de sa propre entrée homme-machine et l'utilisation de données de la machine physique.

45. Dispositif d'affichage de sécurité de qualité nucléaire selon la revendication 43, **caractérisé en ce que** les données de défaut d'autodiagnostic de la machine physique sont périodiquement envoyées à la machine analogique pour une analyse de modélisation afin de réaliser une maintenance préventive et une prévision d'avertissement précoce, et l'analyse de modélisation comprend :
une analyse d'instabilité dépendant de l'horloge ;
une instabilité d'horloge est évaluée et une alarme de maintenance préventive est déclenchée par l'utilisation de valeurs de temps de cycle émanant de la machine physique et de valeurs de temps de blocs de données à l'intérieur d'un cycle, ainsi que des valeurs empiriques obtenues dans le processus de test et de production par les procédés de statistiques de tendance et d'accumulation ;
une analyse d'instabilité d'alimentation électrique ;
une instabilité d'alimentation électrique est évaluée et une alarme de maintenance préventive est déclenchée par l'utilisation de données d'alimentation électrique périodiques acquises à partir de la machine physique et de données empiriques obtenues au cours de tests et de production par les procédés de statistiques de tendance, de calcul de variance, de calcul de crête à crête, de calcul de valeur efficace et de statistiques de crêtes anormales ;
une analyse d'instabilité d'un dispositif d'entrée homme-machine ;
un degré de vieillissement d'un écran tactile résistif ou un degré d'instabilité d'une collecte de données de coordonnées, et une qualité de contact de touches physiques sont évalués, et l'alarme de maintenance préventive est déclenchée par l'utilisation de données de coordonnées de l'écran tactile résistif émanant de la machine physique et de paramètres de filtre de retard des touches physiques, ainsi que de valeurs empiriques obtenues à partir des processus de production et de test par les procédés de statistiques de tendance et de calcul de variance ;
une analyse d'instabilité de dispositif de stockage ;
un statut d'endurance d'écriture de dispositif flash est évalué et l'alarme de maintenance préventive est déclenchée par l'utilisation de temps d'accès d'écriture et de temps d'effacement de dispositif flash émanant de la machine physique et de temps d'accès écriture standard de fournisseur de dispositif flash.
